(19) Europäisches Patentamt
European Patent Office
Office européen des brevets

(11) Veröffentlichungsnummer: **0 197 366**
**B1**

# (12) EUROPÄISCHE PATENTSCHRIFT

(45) Veröffentlichungstag der Patentschrift: **01.02.89**

(51) Int. Cl.⁴: **C09B 62/08**, C09B 62/507, D06P 1/38

(21) Anmeldenummer: **86103586.3**

(22) Anmeldetag: **17.03.86**

## (54) Wasserlösliche Mono- und Disazoverbindungen, Verfahren zu deren Herstellung und ihre Verwendung als Farbstoffe.

(30) Priorität: **21.03.85 DE 3510179**

(43) Veröffentlichungstag der Anmeldung: **15.10.86 Patentblatt 86/42**

(45) Bekanntmachung des Hinweises auf die Patenterteilung: **01.02.89 Patentblatt 89/5**

(84) Benannte Vertragsstaaten: **CH DE FR GB IT LI**

(56) Entgegenhaltungen:
**EP-A- 0 048 355**
**DE-B- 1 179 317**
**GB-A- 1 013 442**

(73) Patentinhaber: **HOECHST AKTIENGESELLSCHAFT, Postfach 80 03 20, D-6230 Frankfurt am Main 80(DE)**

(72) Erfinder: **Segal, Marcos, Dr., Berliner Strasse 10, D-6238 Hofheim am Taunus(DE)**
Erfinder: **Kunze, Michael, Dr., Platanenweg 1a, D-6238 Hofheim am Taunus(DE)**



Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung liegt auf dem technischen Gebiet der faserreaktiven Farbstoffe.

Aus der Europäischen Patentanmeldungs-Veröffentlichung Nr. 0 094 055 A und aus den japanischen Patentanmeldungs-Veröffentlichungen Nrs. Sho 5 742 986, Sho 5 846 185 und Sho 5 846 186 sind faserreaktive Azofarbstoffe bekannt, die einen faserreaktiven Rest aus der Vinylsulfonreihe und einen weiteren faserreaktiven Rest aus der Monochlortriazin-Reihe enthalten. Die beschriebenen Farbstoffe besitzen jedoch gewisse Mängel, wie z.B. ungenügende Naßlicht- und Schweißlichtechtheiten.

Desweiteren sind aus der EP-A 0 065 211 Monoazofarbstoffe mit dem 2-Sulfo-4-methyl-anilin als Diazokomponente und dem 1-Amino-3,6- und -4,6-disulfo-8-naphthol als Kupplungskomponente, an deren Aminogruppe ein kombinierter faserreaktiver Rest aus Chlortriazin und einem Rest der Vinylsulfonreihe gebunden ist, bekannt.

Mit der vorliegenden Erfindung wurden nunmehr neue wertvolle wasserlösliche Azoverbindungen gefunden, die der allgemeinen Formel (1)

$$Y-SO_2-\left[D-N=N\left(-E-N=N\right)_k\right]-K-Z \qquad (1)$$

entsprechen. In dieser Formel bedeuten:

k ist die Zahl Null oder 1;

die Gruppe $-SO_2-Y$ ist zwingend an ein C-Atom eines aromatischen Kernes von D oder eines aromatischen Kernes von E oder eines Benzolkernes eines Substituenten von D gebunden;

D ist der Phenylrest, der durch 1, 2 oder 3 Substituenten substituiert sein kann, die der Gruppe der Substituenten Alkyl von 1 bis 4 C-Atomen, wie Methyl und Ethyl, Alkoxy von 1 bis 4 C-Atomen, wie Methoxy und Ethoxy, Carboxy, Alkanoylamino von 2 bis 5 C-Atomen, das durch Chlor, Brom, Sulfo, Sulfato, Carboxy und Hydroxy substituiert sein kann, wie hiervon bevorzugt Acetylamino, Benzoylamino, Sulfobenzoylamino, Phenylamino, Sulfophenylamino, Carbamoyl, durch Alkyl von 1 bis 4 C-Atomen mono- oder disubstituiertes Carbamoyl, Sulfamoyl, durch Alkyl von 1 bis 4 C-Atomen mono- oder disubstituiertes Sulfamoyl, N-Phenylsulfamoyl, N-Phenyl-N-($C_1$–$C_4$-alkyl)-sulfamoyl, Cyan, Nitro, Chlor, Brom, Fluor, Trifluormethyl, Hydroxy und Sulfo angehören, oder

D ist ein Naphthylrest, der durch 1, 2 oder 3 Substituenten substituiert sein kann, die der Gruppe der Substituenten Sulfo, Carboxy, Methyl, Ethyl, Methoxy, Ethoxy, Alkanoylamino von 2 bis 5 C-Atomen, das durch Chlor, Brom, Sulfo, Sulfato, Carboxy und Hydroxy substituiert sein kann, wie hiervon bevorzugt Acetylamino, Benzoylamino, Sulfobenzoylamino, Chlor, Hydroxy und Nitro angehören, oder

D ist der Phenylrest, der durch die angegebene Gruppe $-SO_2-Y$ substituiert ist und weiterhin durch 1 oder 2 Substituenten substituiert sein kann, die der Gruppe der Substituenten Alkyl von 1 bis 4 C-Atomen, wie Methyl und Ethyl, Alkoxy von 1 bis 4 C-Atomen, wie Methoxy und Ethoxy, Carboxy, Alkanoylamino von 2 bis 5 C-Atomen, das durch Chlor, Brom, Sulfo, Sulfato, Carboxy und Hydroxy substituiert sein kann, wie hiervon bevorzugt Acetylamino, Benzoylamino, Sulfobenzoylamino, Phenylamino, Sulfophenylamino, Carbamoyl, durch Alkyl von 1 bis 4 C-Atomen mono- oder disubstituiertes Carbamoyl, Sulfamoyl, durch Alkyl von 1 bis 4 C-Atomen mono- oder disubstituiertes Sulfamoyl, N-Phenyl-sulfamoyl, N-Phenyl-N-($C_1$–$C_4$-alkyl)-sulfamoyl, Cyan, Nitro, Chlor, Brom, Fluor, Trifluormethyl, Hydroxy und Sulfo angehören, oder

D ist ein Naphthylrest, der durch die angegebene Gruppe $-SO_2-Y$ substituiert ist und weiterhin durch 1 oder 2 Substituenten substituiert sein kann, die der Gruppe der Substituenten Sulfo, Carboxy, Methyl, Ethyl, Methoxy, Ethoxy, Alkanoylamino von 2 bis 5 C-Atomen, das durch Chlor, Brom, Sulfo, Sulfato, Carboxy und Hydroxy substituiert sein kann, wie hiervon bevorzugt Acetylamino, Benzoylamino, Sulfobenzoylamino, Chlor, Hydroxy und Nitro angehören;

E ist der Rest einer kupplungsfähigen und diazotierbaren Verbindung, die beim Aufbau der Verbindungen (1) zunächst als Kupplungskomponente, dann als Diazokomponente dient, und einen Phenylenrest, bevorzugt 1,4-Phenylenrest, darstellt, der durch einen oder zwei Substituenten substituiert sein kann, die aus der Menge von 2 Alkyl von 1 bis 4 C-Atomen, 2 Alkoxy von 1 bis 4 C-Atomen, 2 Chlor, 1 Brom, 1 Alkanoylamino von 2 bis 5 C-Atomen, das durch Chlor, Brom, Sulfo, Sulfato, Carboxy und Hydroxy substituiert sein kann, wie hiervon bevorzugt Acetylamino, 1 Benzoylamino, 2 Sulfo, 1 Carboxy, 1 N,N-Dialkylamino mit Alkylgruppen von jeweils 1 bis 4 C-Atomen, wie Dimethylamino und Diethylamino, 1 Ureido, 1 Phenylureido und 1 Alkylsulfonylamino von 1 bis 4 C-Atomen ausgewählt sind, oder einen Naphthylenrest, wie beispielsweise den 1,4-Naphthylenrest, bedeutet, der durch 1 oder 2 Sulfogruppen oder eine Alkylgruppe von 1 bis 4 C-Atomen, eine Nitrogruppe, eine Alkanoylaminogruppe von 2 bis 5 C-Atomen, wie eine Acetylaminogruppe, oder eine Benzoylaminogruppe oder die angegebene Gruppe $-SO_2-Y$ oder durch 1 oder 2 Sulfogruppen und die angegebene Gruppe $-SO_2-Y$ substituiert sein kann oder der durch die angegebene Gruppe $-SO_2-Y$ und 1 oder 2 Sulfogruppen und eine Alkylgruppe von 1 bis 4 C-Atomen, eine Nitrogruppe, eine Alkanoylaminogruppe von 2 bis 5 C-Atomen oder eine Benzoylaminogruppe substituiert sein kann, oder einen Naphthylenrest darstellt, der in ortho-Stellung zur Azogruppe des Restes $Y-SO_2-D-N=N-$ eine Aminogruppe, eine Alkylaminogruppe von 1 bis 4 C-Atomen oder eine gegebenenfalls durch Chlor, Alkyl von 1 bis 4 C-Atomen, Alkoxy von 1 bis 4 C-Atomen, Sulfo und/oder Carboxy substituierte Phenylaminogruppe oder eine Hydroxygruppe gebunden enthält und der zusätzlich durch eine oder zwei Sulfogruppen oder eine Alkylgruppe von 1 bis 4 C-Atomen, eine Nitrogruppe oder eine Alkanoylaminogruppe von 2 bis 5 C-Atomen, wie Acetylaminogruppe, oder zusätzlich durch eine oder zwei Sulfogruppen und eine Alkylgruppe von 1 bis 4 C-Atomen, Nitro- oder Alkanoylaminogruppe von 2 bis 5 C-Atomen, wie Acetylaminogruppe, substituiert sein kann;

K ist ein 1-Hydroxy-naphthylen-Rest, der in 2-Stellung die Azogruppe gebunden enthält, oder ist ein 2-Hydroxy-naphthylen-Rest, der in 1-Stellung die Azogruppe gebunden enthält, die beide durch 1 oder 2 Sulfogruppen oder durch eine gegebenenfalls durch Chlor, Brom, Sulfo, Sulfato, Carboxy und Hydroxy substituierte Alkanoylaminogruppe von 2 bis 5 C-Atomen oder eine Benzoylaminogruppe oder durch eine oder zwei Sulfogruppen und eine gegebenenfalls durch Chlor, Brom, Sulfo, Sulfato, Carboxy und Hydroxy substituierte Alkanoylaminogruppe von 2 bis 5 C-Atomen oder eine Benzoylaminogruppe substituiert sein können, oder

K ist ein Naphthylenrest, der durch 1 oder 2 Sulfogruppen substituiert sein kann, bevorzugt substituiert ist, oder durch 1 oder 2 Sulfogruppen und eine gegebenenfalls mono- oder disubstituierte Aminogruppe substituiert sein kann, wobei die Substituenten der Aminogruppen der Gruppe der Substituenten Alkyl von 1 bis 4 C-Atomen, Hydroxyalkyl von 1 bis 4 C-Atomen, Carboxyalkyl von 2 bis 5 C-Atomen, Sulfoalkyl von 1 bis 4 C-Atomen, Sulfatoalkyl von 1 bis 4 C-Atomen, Cyanoalkyl von 2 bis 5 C-Atomen, Carbalkoxyalkyl mit alkylresten von jeweils 1 bis 4 C-Atomen, Phenylalkyl mit einem Alkylrest von 1 bis 4 C-Atomen, wobei der Phenylrest durch Methyl, Ethyl, Methoxy, Ethoxy, Chlor, Sulfo und/oder Carboxy substituiert sein kann, Phenyl und durch Alkyl von 1 bis 4 C-Atomen, Alkoxy von 1 bis 4 C-Atomen, Chlor, Carboxy und/oder Sulfo substituiertes Phenyl angehören, oder

K ist ein 1-Amino-naphthylen-Rest, der in 2-Stellung die Azogruppe gebunden enthält, oder ist ein 2-Amino-naphthylen-Rest, der in 1-Stellung die Azogruppe gebunden enthält, wobei beide Aminonaphthylenreste durch 1 oder 2 Sulfogruppen substituiert sein können, bevorzugt substituiert sind, oder durch eine Hydroxygruppe in 5-, 6-, 7- oder 8-Stellung oder durch diese Hydroxygruppe und 1 oder 2 Sulfogruppen substituiert sein können, oder

K ist ein Phenylenrest, wie der 1,3- oder 1,4-Phenylenrest, der durch 1 oder 2 Substituenten substituiert sein kann, wobei die Substituenten aus der nachfolgenden Menge von Substituenten ausgewählt sind: 2 Alkyl von 1 bis 4 C-Atomen, 2 Alkoxy von 1 bis 4 C-Atomen, 2 Chlor, 1 Brom, 1 Alkanoylamino von 2 bis 5 C-Atomen, das durch Chlor, Brom, Sulfo, Sulfato, Carboxy und Hydroxy substituiert sein kann, hiervon bevorzugt Acetylamino, 1 Benzoylamino, 1 Sulfo, 1 Carboxy, 1 Ureido, 1 Phenylureido, 1 Alkylsulfonylamino von 1 bis 4 C-Atomen, 1 Amino und 1 mono- oder disubstituiertes Amino, dessen Substituenten Alkyl von 1 bis 4 C-Atomen, Hydroxyalkyl von 1 bis 4 C-Atomen, Carboxyalkyl von 2 bis 5 C-Atomen, Sulfoalkyl von 1 bis 4 C-Atomen, Sulfatoalkyl von 1 bis 4 C-Atomen, Cyanoalkyl von 2 bis 5 C-Atomen, Carbalkoxyalkyl mit Alkylresten von jeweils 1 bis 4 C-Atomen, Phenylalkyl mit einem Alkylrest von 1 bis 4 C-Atomen (wobei dessen Phenylrest durch Methyl, Ethyl, Methoxy, Ethoxy, Chlor, Carboxy und/oder Sulfo substituiert sein kann), Phenyl und durch Alkyl von 1 bis 4 C-Atomen, Alkoxy von 1 bis 4 C-Atomen, Chlor, Carboxy und/oder Sulfo substituiertes Phenyl sind, wie hiervon bspw. Alkylamino von 1 bis 4 C-Atomen, wie Methylamino und Ethylamino, und N,N-Dialkylamino mit Alkylgruppen von jeweils 1 bis 4 C-Atomen, wie Dimethylamino und Diethylamino;

Y ist die Vinylgruppe oder eine β-Thiosulfatoethyl-, β-Phosphatoethyl-, β-Chlorethyl- oder bevorzugt eine β-Sulfatoethyl-Gruppe;

Z ist ein Rest der allgemeinen Formel (3)

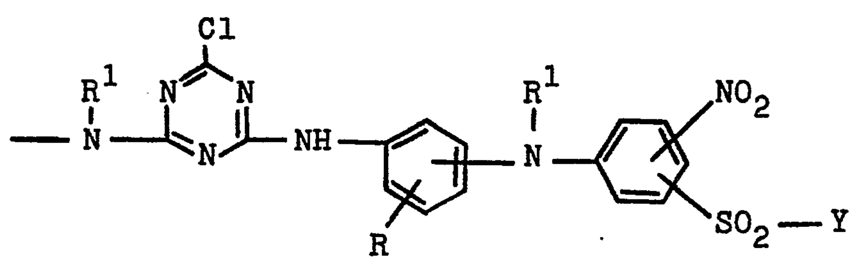

(3)

in welcher

$R^1$ für ein Wasserstoffatom oder eine Alkylgruppe von 1 bis 4 C-Atomen steht, die durch einen oder zwei Substituenten aus der Gruppe Acetylamino, Hydroxy, Sulfato, Alkoxy von 1 bis 4 C-Atomen, Sulfo und Carboxy substituiert sein kann,

wobei beide $R^1$ zueinander gleiche oder voneinander verschiedene Bedeutungen besitzen können,

R ein Wasserstoffatom oder eine Sulfogruppe bedeutet und

Y die obengenannte Bedeutung hat, wobei beide Y zueinander gleiche oder voneinander verschiedene Bedeutungen besitzen können.

Bevorzugt sind Verbindungen der allgemeinen Formel (2)

$$Y - SO_2 - D_1 - N = N - (E_1 - N = N)_k - K - Z \qquad (2)$$

in welcher

$D_1$ ein Phenylenrest ist, der durch 1 oder 2 Substituenten substituiert sein kann, die der Gruppe der Substituenten Alkyl von 1 bis 4 C-Atomen, wie Methyl und Ethyl, Alkoxy von 1 bis 4 C-Atomen, wie Methoxy und Ethoxy, Carboxy, Alkanoylamino von 2 bis 5 C-Atomen, das durch Chlor, Brom, Sulfo, Sulfato, Carboxy und Hydroxy substituiert sein kann, wie hiervon bevorzugt Acetylamino, Benzoylamino, Sulfobenzoylamino, Phenylamino, Sulfophenylamino, Carbamoyl, durch Alkyl von 1 bis 4 C-Atomen mono- oder disubstituiertes Carbamoyl, Sulfamoyl, durch Alkyl von 1 bis 4 C-Atomen mono- oder disubstituiertes Sulfamoyl, N-Phenylsulfamoyl, N-Phenyl-N-($C_1$–$C_4$-alkyl)-sulfamoyl, Cyan, Nitro, Chlor, Brom, Fluor, Trifluormethyl, Hydroxy und Sulfo angehören, oder

$D_1$ ein Naphthylenrest ist, der durch 1 oder 2 Substituenten substituiert sein kann, die der Gruppe der Substituenten Sulfo, Carboxy, Methyl, Ethyl, Methoxy, Ethoxy, Alkanoylamino von 2 bis 5 C-Atomen, das durch Chlor, Brom, Sulfo, Sulfato, Carboxy und Hydroxy substituiert sein kann, wie hiervon bevorzugt Acetylamino, Benzoylamino, Sulfobenzoylamino, Chlor, Hydroxy und Nitro angehören, und

$E_1$ der Rest einer kupplungsfähigen und diazotierbaren Verbindung ist, die beim Aufbau der Verbindungen (1) zunächst als Kupplungskomponente, dann als Diazokomponente dient, und einen Phenylenrest, bevorzugt 1,4-Phenylenrest, darstellt, der durch einen oder zwei Substituenten substituiert sein kann, die aus der Menge von 2 Alkyl von 1 bis 4 C-Atomen, 2 Alkoxy von 1 bis 4 C-Atomen, 2 Chlor, 1 Brom, 1 Alkanoylamino von 2 bis 5 C-Atomen, das durch Chlor, Brom, Sulfo, Sulfato, Carboxy und Hydroxy substituiert sein kann, hiervon bevorzugt Acetylamino, 1 Benzoylamino, 2 Sulfo, 1 Carboxy, 1 N,N-Dialkylamino mit Alkylgruppen von jeweils 1 bis 4 C-Atomen, wie Dimethylamino und Diethylamino, 1 Ureido, 1 Phenylureido und 1 Alkylsulfonylamino von 1 bis 4 C-Atomen ausgewählt sind, oder einen Naphthylenrest, wie beispielsweise den 1,4-Naphthylenrest, bedeutet, der durch 1 oder 2 Sulfogruppen oder durch eine Alkylgruppe von 1 bis 4 C-Atomen, eine Nitrogruppe, eine Alkanoylaminogruppe von 2 bis 5 C-Atomen, wie eine Acetylaminogruppe, oder eine Benzoylaminogruppe oder durch 1 oder 2 Sulfogruppen und eine Alkylgruppe von 1 bis 4 C-Atomen, eine Nitrogruppe, Alkanoylaminogruppe von 2 bis 5 C-Atomen oder Benzoylaminogruppe substituiert sein kann, oder einen Naphthylenrest darstellt, der in ortho-Stellung zur Azogruppe des Restes Y–$SO_2$–D–N=N– eine Aminogruppe, eine Alkylaminogruppe von 1 bis 4 C-Atomen oder eine gegebenenfalls durch Chlor, Alkyl von 1 bis 4 C-Atomen, Alkoxy von 1 bis 4 C-Atomen, Sulfo und/oder Carboxy substituierte Phenylaminogruppe oder eine Hydroxygruppe gebunden enthält und der durch keine weiteren Substituenten substituiert ist oder zusätzlich durch eine oder zwei Sulfogruppen oder eine Alkylgruppe von 1 bis 4 C-Atomen, eine Nitrogruppe, eine durch Chlor, Brom, Sulfo, Sulfato, Carboxy und Hydroxy gegebenenfalls substituierte Alkanoylaminogruppe von 2 bis 5 C-Atomen, wie Acetylaminogruppe, oder eine Benzoylaminogruppe oder zusätzlich durch eine oder zwei Sulfogruppen und eine Alkylgruppe von 1 bis 4 C-Atomen, Nitrogruppe, gegebenenfalls durch Chlor, Brom, Sulfo, Sulfato, Carboxy und Hydroxy substituierte Alkanoylaminogruppe von 2 bis 5 C-Atomen, wie Acetylaminogruppe, oder eine Benzoylaminogruppe substituiert ist, sowie

K, Y, Z und k die für Formel (1) angegebenen Bedeutungen haben.

Im vorstehenden sowie im nachstehenden bedeuten Sulfogruppen Gruppen entsprechend der allgemeinen Formel –$SO_3M$, in welcher

M ein Wasserstoffatom oder ein Alkalimetall, wie Natrium, Kalium oder Lithium, oder das Äquivalent =eines Erdalkalimetalls, wie des Calciums, bevorzugt jedoch ein Wasserstoffatom und insbesondere ein Alkalimetall ist, desweiteren Carboxygruppen Gruppen der allgemeinen Formel –COOM, Phosphatogruppen Gruppen der allgemeinen Formel –$OPO_3M_2$, Thiosulfatogruppen Gruppen der allgemeinen Formel –S–$SO_3M$ und Sulfatogruppen Gruppen der allgemeinen Formel –$OSO_3M$, jeweils mit M der obengenannten Bedeutung.

Die erfindungsgemäßen Azoverbindungen können in Form ihrer freien Säure und bevorzugt in Form ihrer Salz, insbesondere neutralen Salze, vorliegen; als Salze sind insbesondere die Alkalimetallsalze zu nennen. Die neuen Verbindungen finden bevorzugt in Form dieser Salze ihre Verwendung zum Färben und Bedrucken von hydroxy- und/oder carbonamidgruppenhaltigem Fasermaterial.

Bevorzugt sind die Formelreste $R^1$ ein Wasserstoffatom oder eine Alkylgruppe von 1 bis 4 C-Atomen, wie insbesondere die Methyl- oder Ethylgruppe.

Bevorzugt ist Z eine Gruppe der allgemeinen Formel –NH–$Z^2$ mit $Z^2$ der später angegebenen und definierten Gruppe (3b).

Bevorzugt ist D ein Monosulfo- oder Disulfophenyl- oder ein Monosulfo-, Disulfo- oder Trisulfonaphthyl-Rest oder ein Benzolrest der allgemeinen Formel (4)

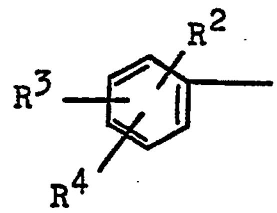

(4)

in welcher
$R^2$ ein Bromatom, eine Nitrogruppe oder eine Alkanoylaminogruppe von 2 bis 5 C-Atomen, wie die Acetylaminogruppe, bevorzugt aber ein Wasserstoffatom, eine Alkylgruppe von 1 bis 4 C-Atomen, wie die Ethylgruppe und insbesondere die Methylgruppe, eine Alkoxygruppe von 1 bis 4 C-Atomen, wie die Ethoxygruppe und insbesondere die Methoxygruppe, ein Chloratom, oder eine Carboxygruppe bedeutet,
$R^3$ ein Bromatom oder eine Hydroxygruppe, bevorzugt aber ein Wasserstoffatom, eine Alkylgruppe von 1 bis 4 C-Atomen, wie die Ethylgruppe und insbesondere die Methylgruppe, eine Alkoxygruppe von 1 bis 4 C-Atomen, wie die Ethoxygruppe und insbesondere die Methoxygruppe, ein Chloratom, oder eine Sulfogruppe ist und
$R^4$ ein Wasserstoffatom oder bevorzugt eine Sulfogruppe bedeutet.

Insbesondere bevorzugt ist jedoch der Formelrest D der Phenylrest, der durch die angegebene Gruppe $-SO_2-Y$ substituiert ist und weiterhin durch 1 oder 2 Substituenten aus der Gruppe Alkyl von 1 bis 4 C-Atomen, Alkoxy von 1 bis 4 C-Atomen, Chlor, Carboxy und Sulfo substituiert sein kann. Bevorzugt ist D weiterhin ein Napthylrest, der durch die angegebene Gruppe $-SO_2-Y$ substituiert ist und weiterhin durch 1 oder 2 Sulfogruppen substituiert sein kann. Sofern k für die Zahl 1 steht, ist das Formelglied E bzw. E1 bevorzugt ein 1-Hydroxy-naphthylen-Rest, der den Azorest $Y-SO_2-D-N=N-$ bzw. $Y-SO_2-D_1-N=N-$ in 2-Stellung gebunden enthält und durch 1 oder 2 Sulfogruppen substituiert ist, oder der 1,4-Phenylenrest, der durch eine Aminogruppe, eine Alkylaminogruppe von 1 bis 4 C-Atomen, Alkanoylaminogruppe von 2 bis 5 C-Atomen, wie Acetylaminogruppe, eine Methyl-, Ethyl-, Carboxy-, Sulfo- oder Ureidogruppe oder ein Chloratom oder durch einen dieser Substituenten und durch eine Methyl-, Ethyl-, Methoxy-, Ethoxy- oder Sulfogruppe oder ein Chloratom substituiert sein kann, oder ein 1,4-Naphthylenrest ist, der durch eine Alkanoylaminogruppe von 2 bis 5 C-Atomen oder eine Benzoylaminogruppe und/oder eine oder zwei Sulfogruppen substituiert sein kann.

Bevorzugt ist D weiterhin insbesondere ein Rest der allgegemeinen Formel (4b), (4c) und (4d)

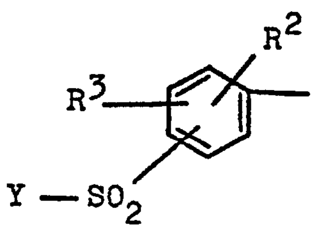

(4b)

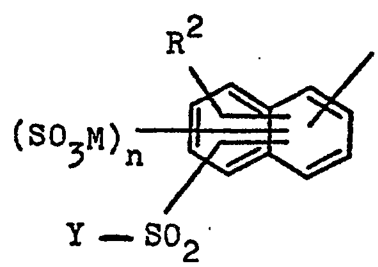

(4c)

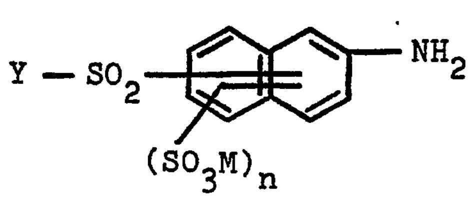

(4d)

in welcher $R^2$, $R^3$, M, Y und n die obengenannten Bedeutungen haben, wobei in Formel (4d) der Index n bevorzugt 1 ist.

Bevorzugt ist in den Verbindungen der allgemeinen Formel (2) der Rest $D_1$ ein Rest der Formel (4e), (4f) oder (4g)

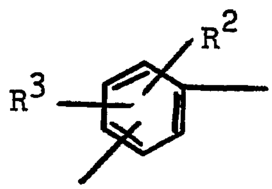

(4e)

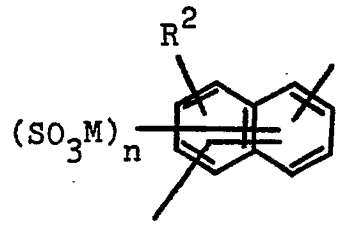

(4f)

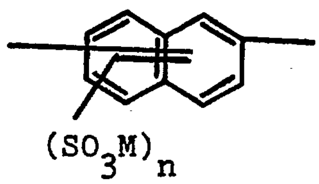

(4g)

in welchen
$R^2$ ein Wasserstoffatom, eine Alkylgruppe von 1 bis 4 C-Atomen, eine alkoxygruppe von 1 bis 4 C-Atomen, ein Chloratom oder eine Carboxygruppe ist,
$R^3$ ein Wasserstoffatom, eine Alkylgruppe von 1 bis 4 C-Atomen, eine Alkoxygruppe von 1 bis 4 C-Atomen, ein Chloratom oder eine Sulfogruppe ist,
M ein Wasserstoffatom oder ein Alkalimetall bedeutet und
n für die Zahl 1 oder 2 steht.

Die Substituenten $R^2$, $R^3$ und $R^4$ können zueinander gleiche oder voneinander verschiedene Bedeutung haben.

Die vorliegende Erfindung betrifft weiterhin Verfahren zur Herstellung der Azoverbindungen der Formel (1). Diese können erfindungsgemäß hergestellt werden, indem man eine Verbindung der allgemeinen Formel (5)

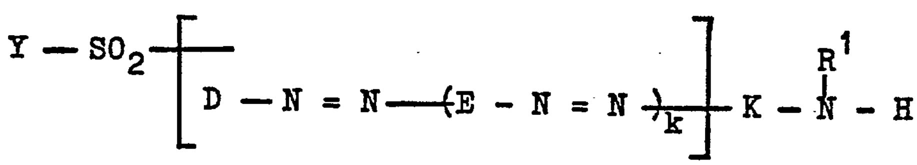

(5)

mit D, E, K, Y, k und $R^1$ der obengenannten Bedeutungen, die in an und für sich üblicher und bekannter Weise der Diazotierung und Kupplung der entsprechenden Komponenten hergestellt werden kann, mit einer Dichlortriazin-Verbindung der allgemeinen Formel (6)

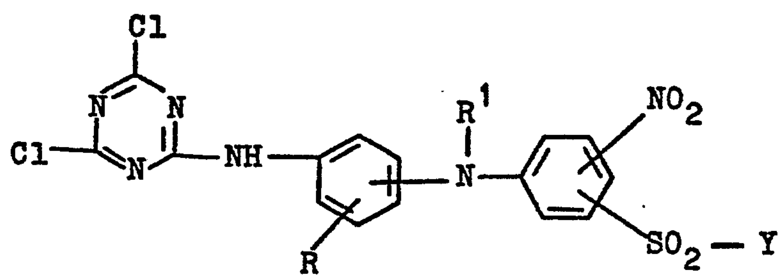

(6)

in welcher $R^1$, R und Y die obengenannten Bedeutungen haben, unter Abspaltung eines Mols Chlorwasserstoff umsetzt, oder daß man eine Verbindung der allgemeinen Formel (7)

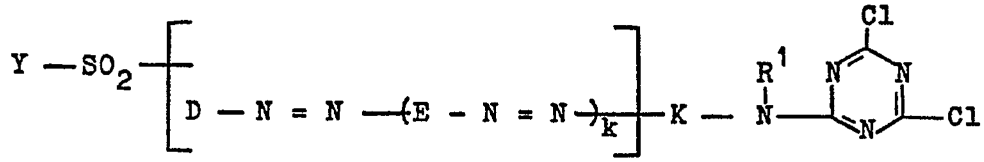

(7)

mit D, E, K, Y, k und R¹ der obengenannten Bedeutung, die in an und für sich üblicher Weise durch Umsetzung der Verbindung (5) mit 2,4,6-Trichlor-s-triazin (Cyanurchlorid) hergestellt werden kann, mit einer Aminodiphenylamin-Verbindung der allgemeinen Formel (8)

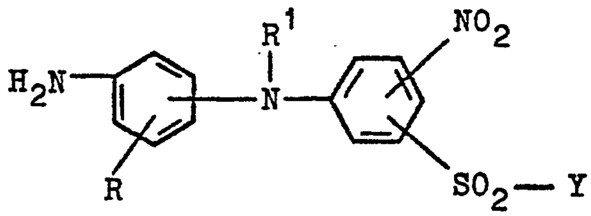

(8)

in welcher R¹, R und Y die obengenannten Bedeutungen haben, unter Abspaltung eines Mols Chlorwasserstoff umsetzt.

Die erfindungsgemäße Verfahrensvariante der Umsetzung einer Verbindung der allgemeinen Formel (5) mit einer Verbindung der allgemeinen Formel (6) kann in wäßrig-organischem Medium durchgeführt werden; bevorzugt erfolgt sie in wäßriger Lösung. Die Reaktionstemperatur liegt in der Regel zwischen 0 und 50°C, bevorzugt zwischen 25 und 45°C, insbesondere zwischen 35 und 40°C. In der Regel wird ein pH-Wert zwischen 4 und 8, bevorzugt zwischen 5 und 7, eingehalten.

Die Kondensationsreaktion der Umsetzung einer Amino-Azoverbindung der allgemeinen Formel (5) mit Cyanurchlorid zur Ausgangsverbindung (7) erfolgt in der Regel in wäßriger, neutraler bis saurer Lösung bei einer Temperatur zwischen –10°C und +20°C, vorzugsweise bei einer Temperatur zwischen 5 und 10°C und einem pH-Wert von 4 bis 6. Die erfindungsgemäße Kondensationsreaktion der Umsetzung der Dichlortriazin-Azoverbindung der allgemeinen Formel (7) mit der Aminodiphenylamin-Verbindung der allgemeinen Formel (8) erfolgt in der Regel anschließend, bevorzugt ohne weitere Isolierung der zuvor hergestellten Verbindung (7) aus dem Reaktionsansatz, in wäßrig-organischer Lösung, bevorzugt wäßriger, neutraler bis saurer Lösung in der Regel bei einer Temperatur zwischen 0 und 50°C, bevorzugt zwischen 10 und 40°C, und bevorzugt bei einem pH-Wert zwischen 3 und 7, insbesondere zwischen 6 und 6,5.

Die zur Herstellung der Ausgangsverbindungen der allgemeinen Formel (5) oder (7) dienenden Diazokomponenten entsprechend einer allgemeinen Formel $Y{-}SO_2{-}D{-}NH_2$ und $Y{-}SO_2{-}D{-}N{=}N{-}E_1{-}NH_2$ sind beispielsweise Verbindungen der allgemeinen Formeln (9a) bis (9h)

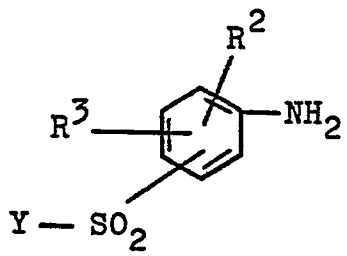

(9a)

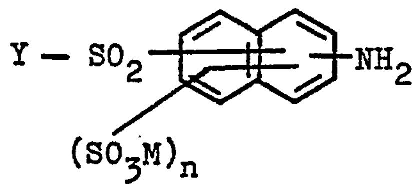

(9b)

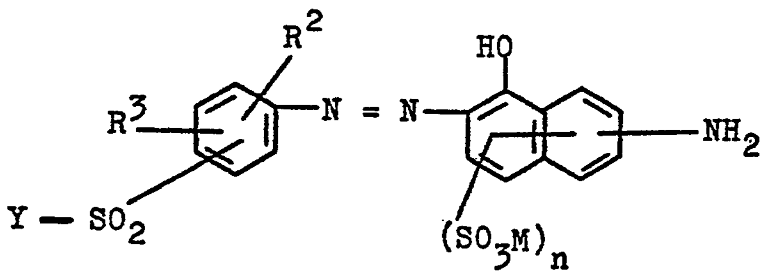

(9c)

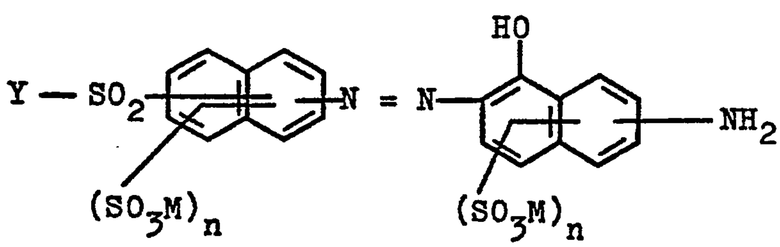

(9d)

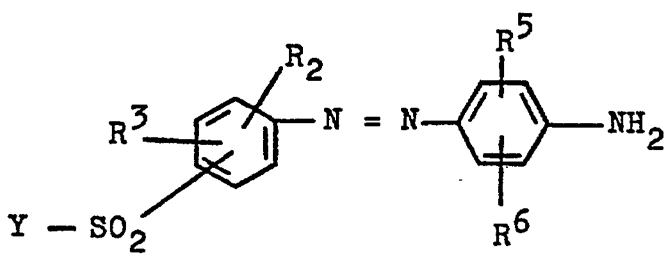

(9e)

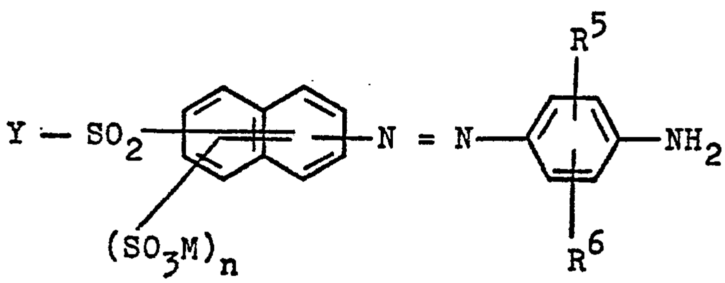

(9f)

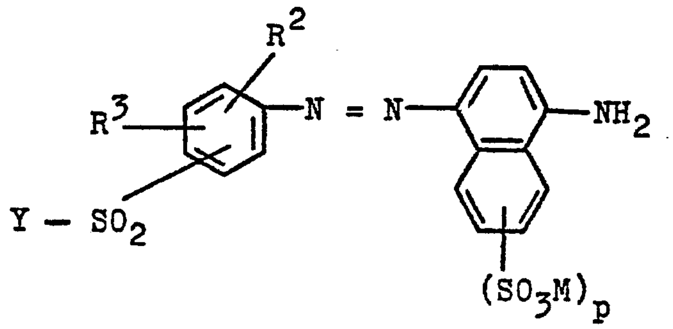

(9g)

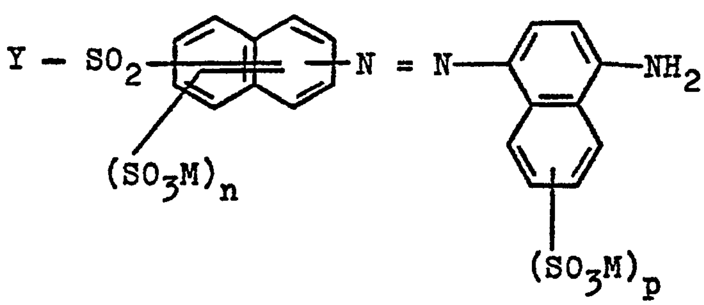

(9h

in welcher M, $R^2$, $R^3$ und Y die obengenannten Bedeutungen haben,
n die Zahl 1 oder 2 bedeutet,
p die Zahl Null, 1 oder 2 ist,
$R^5$ ein Wasserstoffatom, eine Sulfogruppe, eine Alkylgruppe von 1 bis 4 C-Atomen, wie die Ethylgruppe und insbesondere die Methylgruppe, eine Alkoxygruppe von 1 bis 4 C-Atomen, wie die Ethoxygruppe und insbesondere Methoxygruppe, ein Chloratom oder ein Bromatom ist,
$R^6$ ein Wasserstoffatom, eine Sulfogruppe, eine Alkylgruppe von 1 bis 4 C-Atomen, wie die Ethylgruppe und insbesondere Methylgruppe, eine Alkoxygruppe von 1 bis 4 C-Atomen, wie die Ethoxygruppe und insbesondere Methoxygruppe, ein Chloratom, ein Bromatom, eine Alkanoylaminogruppe, wie die Acetylaminogruppe, die Aminogruppe, eine Alkylaminogruppe von 1 bis 4 C-Atomen, eine Dialkylaminogruppe mit Alkylresten von jeweils 1 bis 4 C-Atomen, die Ureidogruppe oder eine Alkylsulfonylaminogruppe von 1 bis 4 C-Atomen bedeutet
und die diazotierbare Aminogruppe in den Formeln (9c) und (9d) in 5-, 6- oder 7-Stellung des 1-Naptholrestes gebunden ist.

Kupplungskomponenten der allgemeinen Formel H–K–NHR[1] mit K und R[1] der obengenannten Bedeutung, die zur Herstellung der Ausgangsverbindungen der allgemeinen Formel (5) und (7) dienen können, sind beispielsweise Verbindungen der allgemeinen Formel (10a), (10b) und (10c)

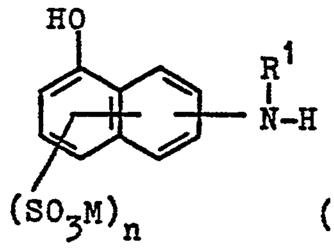

(10a)

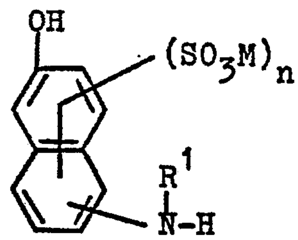

(10b)

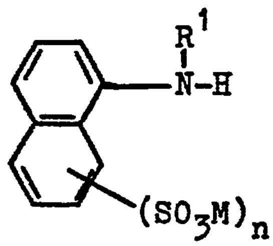

(10c)

in welchen M, $R^1$ und n die obengenannten Bedeutungen haben.

Aus Kombinationen der obengenannten Diazokomponenten entsprechend den allgemeinen Formeln (9) und der Kupplungskomponenten der allgemeinen Formeln (10) mit dem Rest des Cyanurchlorids und dem Rest des Aminodiphenylamins der allgemeinen Formel (8) oder mit dem Dichlortriazinylamino-diphenylamin-Rest der allgemeinen Formel (7) ergeben sich bevorzugte Monoazo- und Disazoverbindungen der allgemeinen Formel (2).

Die neuen Azoverbindungen der allgemeinen Formel (1) können zum Teil erfindungsgemäß auch in der Weise hergestellt werden, daß man eine Diazoniumverbindung eines Amins der allgemeinen Formel (11)

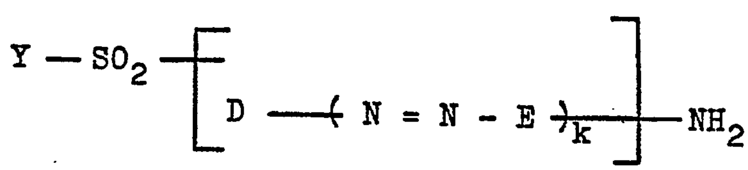

in welcher Y, D, E und k die für Formel (1) angegebenen Bedeutungen haben, mit einer kupplungsfähigen Verbindung der allgemeinen Formel H–K–Z mit K und Z der obengenannten Bedeutung kuppelt. Hierbei ist Voraussetzung, wie dem Fachmann geläufig, daß die faserreaktive Gruppe Z als ein Acylaminorest nicht in einer Stellung der Kupplungskomponente H–K–Z gebunden ist, die die Kupplung behindert, wie beispielsweise eine in 1-Stellung durch Z substituierte Naphthalinsulfonsäure. Kupplungskomponenten der allgemeinen Formel H–K–Z sind beispielsweise Verbindungen der allgemeinen Formel (12a) bis (12e)

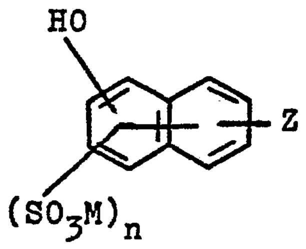

(12a)

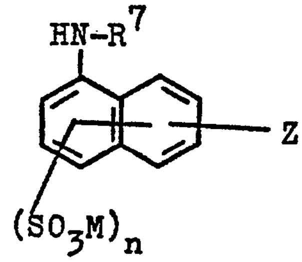

(12b)

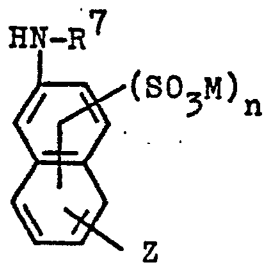

(12c)

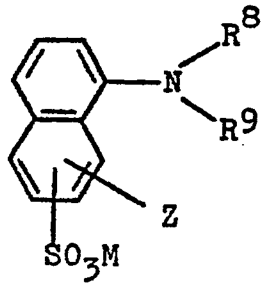

(12d)

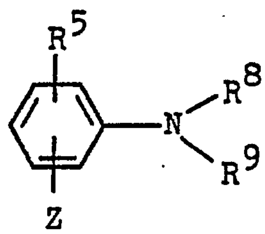

(12e)

in welchen M, Z, $R^5$ und n die obengenannten Bedeutungen haben,
$R^7$ für ein Wasserstoffatom, eine Alkylgruppe von 1 bis 4 C-Atomen oder einen gegebenenfalls durch Chlor, Methyl, Ethyl, Methoxy, Ethoxy, Sulfo und/oder Carboxy substituierten Phenylrest steht,
$R^8$ ein Wasserstoffatom bedeutet oder eine Alkylgruppe von 1 bis 4 C-Atomen, die durch eine Hydroxy-, Carboxy-, Sulfo-, Sulfato-, Carbomethoxy- oder Carbethoxygruppe substituiert sein kann, und
$R^9$ ein Wasserstoffatom oder eine Alkylgruppe von 1 bis 4 C-Atomen ist, die durch eine Hydroxy-, Cyano-, Carboxy-, Sulfo-, Sulfato-, Carbomethoxy- oder Carbethoxygruppe oder ein Phenylrest substituiert sein kann, oder ein Phenylrest ist, der durch Alkyl von 1 bis 4 C-Atomen, Alkoxy von 1 bis 4 C-Atomen, Chlor und/oder Sulfo substituiert sein kann,
wobei der Rest Z in Formel (12e) bevorzugt in meta-Stellung zur Aminogruppe $-NR^8R^9$ gebunden ist.

Die Ausgangsverbindungen der allgemeinen Formeln (12) lassen sich in an und für sich üblicher Weise aus den Aminonaphthalin- und Anilinverbindungen, in denen anstelle des Formelrestes Z in den Formeln (12) die Aminogruppe steht, mit Cyanurchlorid und der Aminodiphenylamin-Verbindung der allgemeinen Formel (8) herstellen. So erfolgt beispielsweise die Synthese der Verbindungen der allgemeinen Formel H–K–Z durch Umsetzung einer Verbindung der allgemeinen Formel $H–K–NHR^1$ mit einer Dichlortriazinylamino-diphenylamin-Verbindung der allgemeinen Formel (6) in wäßrig-organischem oder bevorzugt wäßrigem Medium bei einer Temperatur zwischen 10 und 20°C und bei einem pH-Wert zwischen 6 und 6,5.

Sofern die oben erwähnten Kondensationsreaktionen zwischen den Aminoverbindungen und Cyanurchlorid oder einer Dichlortriazinylamino-Verbindung und einer Aminoverbindung in wäßrig-organischem Medium erfolgt, ist das anteilige organische Lösemittel bevorzugt Aceton, Dioxan und Dimethylformamid.

Eine der als Ausgangsverbindungen dienenden Amino-diphenylamin-Verbindungen der allgemeinen Formel (8) ist in Form ihrer β-Hydroxyethylsulfonyl-Vorstufe bekannt (s. Deutsche Auslegeschrift 1 179 317, Beispiel 5). Andere Amino-diphenylamin-Verbindungen der Formel (8) lassen sich über diese β-Hydroxyethylsulfon-Vorstufe in analoger Weise mit Hilfe der entsprechenden isomeren Acylamino-anilin- und (β-Hydroxyethylsulfonyl)-nitro-chlorbenzol-Verbindungen leicht herstellen. So erhält man beispielsweise das 4-Amino-2'-(β-hydroxyethylsulfonyl)-5'-nitro-diphenylamin durch Umsetzung von 1,4-Phenylendiamin und 2-Chlor-5-nitrophenyl-(β-hydroxyethyl)-sulfon in methanolischer Lösung bei einer Temperatur zwischen 50 und 70°C innerhalb weniger Stunden, das sich aus der Reaktionslösung nach Abkühlen auf Raumtemperatur und Zugabe von Eiswasser kristallin in hoher Ausbeute abscheidet.

Aus diesen β-hydroxyethylsulfonyl-substituierten Amino-diphenylamin-Ausgangsverbindungen lassen sich die faserreaktiven Ausgangsverbindungen der allgemeinen Formel (8) in der für die Synthese von faserreaktiven Gruppen der Vinylsulfonreihe üblichen Weise synthetisieren. Bevorzugt werden sie zunächst in deren Sulfatoderivate durch Umsetzung mit einem Sulfatierungsmittel analog bekannten Verfahrensweisen übergeführt. Sulfatierungsmittel sind beispielsweise 96 bis 100%ige oder Schwefeltrioxid enthaltende Schwefelsäure oder Chlorsulfonsäure in einem organischen Lösemittel, wie Pyridin oder N-Methyl-pyrrolidon. Analoge Sulfatierungsreaktionen dieser Art sind beispielsweise aus der bereits genannten DE-AS 1 179 317 sowie aus der britischen Patentschrift Nr. 1 540 566 und der europäischen Patentanmeldungs-Veröffentlichung Nr. 0 036 383 bekannt. Bevorzugt erfolgt die Sulfatierung der β-Hydroxyethyl-sulfonyl-Ausgangsverbindung zur entsprechenden Verbindung der allgemeinen Formel (8), in welcher Y für die β-Sulfatoethyl-Gruppe steht, in 100%iger Schwefelsäure bei Temperaturen zwischen 10 und 30°C. Hieraus läßt sich die wasserlösliche bzw. in Schwefelsäure lösliche Sulfatoverbindung nach Eintragen der Schwefelsäure-Lösung in Eiswasser isolieren.

In analoger Weise lassen sich die Verbindungen der allgemeinen Formel (8), in welchen Y für die β-Phosphatoethyl-Gruppe steht, durch Umsetzung mit einem geeigneten und hierfür üblichen Phosphatierungsmittel, wie Phosphorsäure, Polyphosphorsäure oder Phosphorpentachlorid, herstellen.

Aus den β-Sulfatoethylsulfonyl-Verbindungen der allgemeinen Formel (8) erhält man die entsprechenden Vinylsulfonyl-Verbindungen (mit Y gleich der Vinylgruppe in Formel (8)) durch Umsetzung mit einem Alkali in wäßriger Lösung, beispielsweise indem man eine Lösung der Sulfatoverbindung in alkalisch-wäßriger Lösung bei einem pH-Wert zwischen 8 und 10 und bei einer Temperatur zwischen etwa 40 und 60°C für kurze Zeit behandelt.

Aus diesen Vinylsulfonyl-Verbindungen der allgemeinen Formel (8) lassen sich die entsprechenden β-Thiosulfatoethylsulfonyl-Verbindungen durch Umsetzung mit einem Alkalithiosulfat herstellen, so beispielsweise durch Umsetzung der Vinylsulfonyl-Verbindung der Formel (8) mit Natriumthiosulfat, vorteilhaft im Überschuß, wie in 21 bis 40%igem Überschuß, in wäßriger schwach saurer Lösung bei einer Temperatur zwischen 30 und 80°C.

Amino-diphenylamin-Ausgangsverbindungen der allgemeinen Formel (8) sind beispielsweise 1-Nitro-2-(4'-amino-phenylamino)-5-(β-sulfatoethylsulfonyl)-benzol, 1-Nitro-4-(4'-amino-phenylamino)-5-(β-sulfatoethylsulfonyl)-benzol, 1-Nitro-2-(3'-amino-phenylamino)-5-(β-sulfatoethylsulfonyl)-benzol, 1-Nitro-2-(4'-amino-3'-sulfo-phenylamino)-5-(β-sulfatoethylsulfonyl)-benzol und 1-Nitro-2-(4'-amino-2'-sulfo-phenylamino)-5-(β-sulfatoethylsulfonyl)-benzol.

Aromatische Amine der allgemeinen Formel $D-NH_2$ bzw. $Y-SO_2-D_1-NH_2$, die als Diazokomponenten zur Synthese der erfindungsgemäßen Verbindungen dienen können, sind bspw. 1-Aminobenzol-2-sulfonsäure, 1-Aminobenzol-3- und -4-sulfonsäure, 2-Amino-4-sulfobenzoesäure, 2-Amino-5-sulfo-benzoesäure, 4-Amino-2-sulfo-benzoesäure, 4-Amino-toluol-2- und -3-sulfonsäure, 2-Amino-toluol-4- und -5-sulfonsäure, 2-Aminotoluol-4-carbonsäure, Anthranilsäure, 4-Amino-benzoesäure, 2-Amino-anisol-4- und -5-sulfonsäure, 4-Amino-anisol-2- und -3-sulfonsäure, 3-Chlor-2-amino-3-toluol-5-sulfonsäure, 4-Chlor-2-amino-toluol-5-sulfonsäure, 5-Chlor-2-aminotoluol-3- und -4-sulfonsäure, 6-Chlor-2-amino-toluol-4-sulfonsäure, 6-Chlor-3-amino-toluol-4-sulfonsäure, 1-Aminobenzol-2,5-disulfonsäure, 1-Aminobenzol-2,4- und -3,5-disulfonsäure, 2-Amino-toluol-3,5-disulfonsäure, 2-Aminotoluol-4,5- und -4,6-disulfonsäure, 4-Amino-toluol-2,5-disulfonsäure, 2-Aminonaphthalin-1-sulfonsäure, 2-Aminonaphthalin-5- und -6-sulfonsäure, 2-Aminonaphthalin-7- und -8-sulfonsäure, 1-Amino-naphthalin-2-, -3-, -4-, -5-, -6-, -7- und -8-sulfonsäure, 2-Aminonaphthalin-4,8-disulfonsäure, 2-Aminonaphthalin-6,8-disulfonsäure, 2-Aminonaphthalin-1,5- und -1,7-disulfonsäure, 2-Aminonaphthalin-5,7-, -3,6-, -3,7- und -4,7-disulfonsäure, 1-Aminonaphthalin-2,4-, -2,5-, -3,6-, -3,7-, -3,8-, -4,6-, -4,7- -4,8-, -5,7- und -6,8-disulfonsäure, 2-Aminonaphthalin-3,6,8-trisulfonsäure, 2-Aminonaphthalin-4,6,8- und -1,5,7-trisulfonsäure, 1-Aminonaphthalin-2,4,7-trisulfonsäure, 1-Amino-naphthalin-2,4,8-, -3,5,7-, -3,6,8- und -4,6,8-trisulfonsäure, insbesondere 1-Amino-4-(β-sulfatoethylsulfonyl)-benzol, 1-Amino-3-(β-sulfatoethylsulfonyl)-benzol, 1-Amino-2-methoxy-5-(β-sulfatoethylsulfonyl)-benzol, 1-Amino-2-hydroxy-5-(β-sulfatoethylsulfonyl)-benzol, 1-Amino-2-hydroxy-4-(β-sulfatoethylsulfonyl)-benzol, 1-Amino-2-methyl-4-(β-sulfatoethylsulfonyl)-benzol, 1-Amino-2-methoxy-5-methyl-4-(β-sulfatoethylsulfonyl)-benzol, 1-Amino-2,5-dimethoxy-4-(β-sulfatoethylsulfonyl)-benzol, 1-Amino-2-methyl-5-methoxy-4-(β-sulfatoethylsulfonyl)-benzol, 2-Chlor-1-amino-5-(β-sulfatoethylsulfonyl)-benzol, 2-Sulfo-1-amino-5-(β-sulfatoethylsulfonyl)-benzol, 2-Carboxy-1-amino-5-(β-sulfatoethylsulfonyl)-benzol, 1-Amino-4-chlor-5-(β-sulfatoethylsulfonyl)-benzol, 1-Amino-2-brom-4-(β-sulfatoethylsulfonyl)-benzol, 1-Amino-2-(β-sulfatoethylsulfonyl)-benzol, 1-Amino-4-[3'-(β-sulfatoethylsulfonyl)-benzoylamino]-benzol, 2-Amino-1-sulfo-6-(β-sulfatoethylsulfonyl)-naphthalin, 2-Amino-6-sulfo-8-(β-sulfatoethylsulfonyl)-naphthalin, 1-Amino-6-sulfo-4-(β-sulfatoethylsulfonyl)-naphthalin, 1-Amino-7-sulfo-5-(β-sulfatoethylsulfonyl)-naphthalin, 1-Amino-4-sulfo-6-(β-sulfatoethylsulfonyl)-naphthalin, 1-Amino-4-sulfo-7-(β-sulfatoethylsulfonyl)-naphthalin, 2-Amino-1-sulfo-5-(β-sulfatoethylsulfonyl)-naphthalin, 2-Amino-1,7-disulfo-5-(β-sulfatoethylsulfonyl)-naphthalin, 2-Amino-8-sulfo-6-(β-sulfatoethylsulfonyl)-naphthalin, 1-Amino-4-(β-sulfatoethylsulfonyl)-napthalin, 1-Amino-5-(β-sulfatoethylsulfonyl)-naphthalin, 1-Amino-6-(β-sulfatoethylsulfonyl)-naphthalin, 1-Amino-7-(β-sulfatoethylsulfonyl)-naphthalin, 1-Amino-2-ethoxy-6-(β-sulfatoethylsulfonyl)-naphthalin, 2-Amino-5-(β-sulfatoethylsulfonyl)-naphthalin, 2-Amino-6-(β-sulfatoethylsulfonyl)-naphthalin, 2-Amino-7-(β-sulfatoethylsulfonyl)-naphthalin und 2-Amino-8-(β-sulfa-

toethylsulfonyl)-naphthalin sowie deren entsprechenden β-Thiosulfatoethylsulfonyl-, β-Phosphatoethylsulfonyl-, β-Chlor-ethylsulfonyl- und Vinylsulfonyl-Derivate.

Verbindungen entsprechend der allgemeinen Formel $H-E-NH_2$ bzw. $H-E_1(-SO_2-Y)-NH_2$, die zur Herstellung der erfindungsgemäßen Disazoverbindungen dienen können, sind bspw. Anilin, 3-Methylanilin, 3-Chloranilin, 2,5-Dimethylanilin, 2,5-Dimethoxyanilin, 3-Methoxyanilin, 3-Methyl-6-methoxyanilin, 3-Aminophenylharnstoff, 3-Acetylamino-6-methylanilin, 2-Amino-4-acetyl-aminobenzol-1-sulfonsäure, 1,3-Diaminobenzol, 1,3-Diamino-4-methyl- oder -methoxy-benzol, 1,3-Diamino-benzol-4-sulfonsäure, 1-Aminonaphthalin, 1-Aminonaphthalin-6- oder -7-sulfonsäure, 3-Acetylaminoanilin, 2-Amino-8-naphthol-6-sulfonsäure, 2-Amino-8-naphthol-4,6-disulfonsäure, 2-Amino-5-naphthol-7-sulfonsäure, 3-Amino-5-naphthol-7-sulfonsäure, 1-Amino-5-naphthol-7-sulfonsäure, 1-Amino-naphthalin-8-sulfonsäure, 2-Methylanilin, 2-Methoxyanilin, 3-Benzoyl-amino-anilin, 2,3-Dimethylanilin, 3,5-Dimethylanilin, 1-Amino-2-methoxy-5-acetylaminobenzol, ebenso auch 1-Amino-7-sulfo-5-(β-sulfatoethylsulfonyl)-naphthalin, 1-Amino-5-(β-sulfatoethylsulfonyl)-naphthalin, 1-Amino-6-(β-sulfatoethylsulfonyl)-naphthalin, 1-Amino-7-(β-sulfatoethylsulfonyl)-naphthalin, 1-Amino-2-ethoxy-6-(β-sulfatoethylsulfonyl)-naphthalin, 2-Amino-5-(β-sulfatoethylsulfonyl)-naphthalin, 2-Amino-6-(β-sulfatoethylsulfonyl)-naphthalin, 2-Amino-7-(β-sulfatoethylsulfonyl)-naphthalin und 2-Amino-8-(β-sulfatoethylsulfonyl)-naphthalin sowie deren entsprechenden β-Thiosulfatoethylsulfonyl-, β-Phosphatoethylsulfonyl-, β-Chlorethylsulfonyl- und Vinylsulfonyl-Derivate.

Weitere Ausgangsverbindungen, die der allgemeinen Formel $H-K-NHR^1$ entsprechen, sind beispielsweise Anilin, 3-Methylanilin, 3-Chloranilin, 2,5-Dimethylanilin, 2,5-Dimethoxyanilin, 3-Methoxyanilin, 3-Methyl-6-methoxyanilin, 3-Aminophenylharnstoff, 3-Acetylamino-6-methyl-anilin, 2-Amino-4-acetylamino-benzol-1-sulfonsäure, 1,3-Diaminobenzol, 1,3-Diamino-4-methyl- oder -methoxy-benzol, 1,3-Diamino-benzol-4-sulfonsäure, 1-Aminonaphthalin, 1-Aminonaphthalin-6- oder -7-sulfonsäure, 3-Acetylaminoanilin, 2-Amino-8-naphthol-6-sulfonsäure, 2-Amino-8-naphthol-4,6-disulfonsäure, 2-Amino-5-naphthol-7-sulfonsäure, 3-Amino-5-naphthol-7-sulfonsäure, 1-Amino-5-naphthol-7-sulfonsäure, 1-Amino-naphthalin-8-sulfonsäure, 1-Amino-8-naphthol-3,6-disulfonsäure, 1-Amino-8-naphthol-4,6-disulfonsäure, 2-Methylanilin, 2-Methoxyanilin, 3-Benzoylaminoanilin, 2,3-Dimethylanilin, 3,5-Dimethylanilin, 1-Amino-2-methoxy-5-acetylamino-benzol, 3-Amino-N,N-dimethylanilin, 3-Amino-N,N-diethylanilin, 3-Amino-N,N-di-(β-sulfoethyl)-anilin, 3-Amino-N-methyl-N-(β-sulfoethyl)-anilin, N-Methyl-anilin, 3-Chlor-N-methyl-anilin, N-(β-Cyanoethyl)-anilin und N-Ethylanilin.

Kupplungskomponenten, die erfindungsgemäß zur Herstellung der Azoverbindungen der allgemeinen Formel (1) dienen können und die der allgemeinen Formel H-K-Z entsprechen, sind beispielsweise die nachfolgenden Aminonaphthol-sulfonsäuren, an deren (eine) Amino- oder Methylamino-Gruppe der faserreaktive Rest $Z^1$ der allgemeinen Formel (3a)

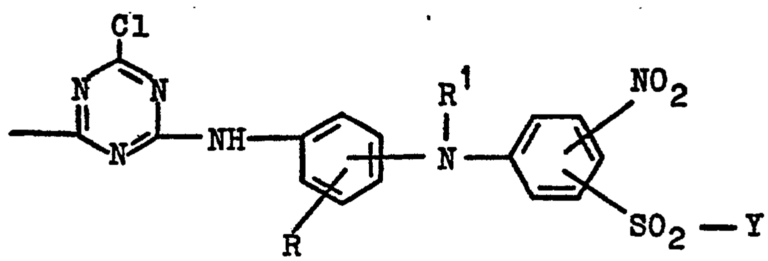

(3a)

in welcher R, $R^1$ und Y die obengenannten Bedeutungen haben, gebunden ist:

1-Amino-3,6-disulfo-8-naphthol, 1-Amino-4,6-disulfo-8-naphthol, 2-Amino-3,6-disulfo-8-naphthol, 3-Amino-6-sulfo-8-naphthol, 3-Amino-4,6-disulfo-8-naphthol, 3-Methylamino-6-sulfo-8-naphthol, 1-Amino-7-sulfo-5-naphthol, 2-Amino-6-sulfo-8-naphthol, 1-Amino-4-sulfo-8-naphthol, 2-Methylamino-6-sulfo-8-naphthol, 2-Amino-5-naphthol-7-sulfonsäure, 1-Amino-2,4-disulfo-8-naphthol.

Von den erfindungsgemäßen Azoverbindungen der allgemeinen Formel (1) können insbesondere solche Gruppen von Verbindungen hervorgehoben werden, die den allgemeinen Formeln (13), (14), (15), (16), (17), (18) entsprechen:

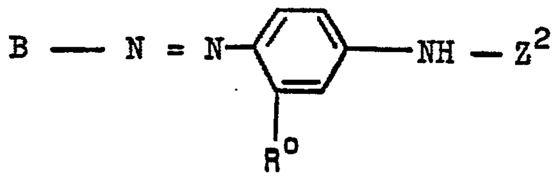

(13)

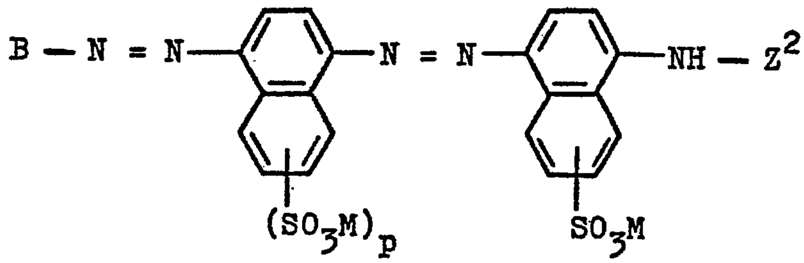

(14)

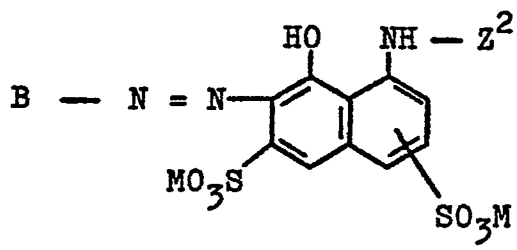

(15)

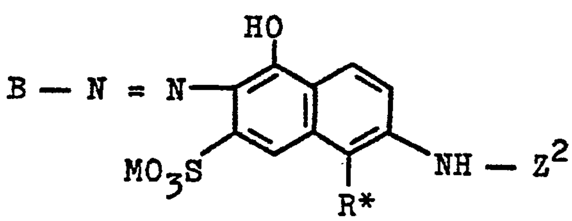

(16)

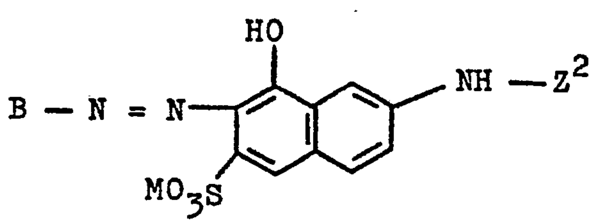

(17)

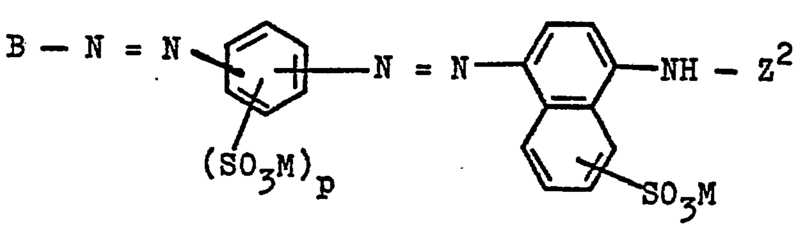

(18)

In diesen Formeln bedeuten:
M hat die obengenannte Bedeutung;

$Z^2$ ist ein Rest der allgemeinen Formel (3b)

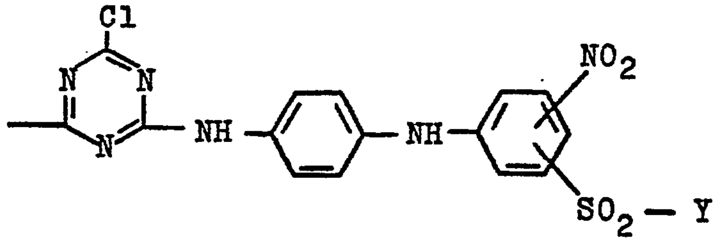

(3b)

in welcher Y die obengenannte Bedeutung besitzt und die Gruppe $-SO_2-Y$ und die Nitrogruppe zueinander metaständig an den Benzolkern gebunden sind, jedoch beide nicht gleichzeitig ortho-ständig zur Aminogruppe stehen; B ist ein Rest der obengenannten und definierten allgemeinen Formel (4b), (4c) oder (4d);
p ist die Zahl Null, 1 oder 2;
R* ist ein Wasserstoffatom oder eine Sulfogruppe;
$R^o$ ist ein Wasserstoffatom, ein Chlor- oder Bromatom, eine Aminogruppe, eine Alkanoylaminogruppe von 2 bis 5 C-Atomen, wie Acetylaminogruppe, eine Sulfo-, Carboxy-, Methyl-, Ethyl-, Methoxy- oder Ureidogruppe.

Insbesondere bevorzugt ist in diesen Verbindungen der Formelrest Y eine β-Sulfatoethyl-Gruppe.

Von den Verbindungen der allgemeinen Formel (13) sind insbesondere diejenigen hervorzuheben, in welchen $R^o$ für die Aminogruppe, die Acetylamino-, Sulfo-, Methoxy-, Methyl- oder Ureidogruppe steht.

Von den Verbindungen der allgemeinen Formel (15) sind insbesondere diejenigen bevorzugt, bei denen eine Sulfogruppe im Formelrest B in ortho-Stellung zur Azogruppe an den Benzol- bzw. Naphthalinkern gebunden ist.

In den Verbindungen der allgemeinen Formel (14) ist p bevorzugt die Zahl 1 oder 2.

Die Abscheidung und Isolierung der erfindungsgemäß hergestellten Verbindungen der allgemeinen Formel (1) aus den Syntheselösungen kann nach allgemein bekannten Methoden erfolgen, so beispielsweise entweder durch Ausfällen aus dem Reaktionsmedium mittels Elektrolyten, wie beispielsweise Natriumchlorid oder Kaliumchlorid, oder durch Eindampfen der Reaktionslösung, beispielsweise Sprühtrocknung, wobei dieser Reaktionslösung eine Puffersubstanz zugefügt werden kann.

Die erfindungsgemäßen Verbindungen der allgemeinen Formel (1) haben faserreaktive Eigenschaften und besitzen sehr gute Farbstoffeigenschaften. Sie können deshalb zum Färben (einschließlich Bedrucken) von hydroxygruppenhaltigen und/oder carbonamidgruppenhaltigen Materialien verwendet werden. Auch können die bei der Synthese der erfindungsgemäßen Verbindungen anfallenden Lösungen, gegebenenfalls nach Zusatz einer Puffersubstanz und gegebenenfalls auch nach Konzentrierung, direkt als Flüssigpräparation der färberischen Verwendung zugeführt werden.

Gegenstand der vorliegenden Erfindung ist deshalb auch die Verwendung der erfindungsgemäßen Verbindungen der allgemeinen Formel (1) zum Färben (einschließlich Bedrucken) von hydroxy- und/oder carbonamidgruppenhaltigen Materialien bzw. Verfahren zu deren Anwendung auf diesen Substraten. Eingeschlossen ist hierbei Massefärbung, wie bspw. von Folien aus Polyamid. Bevorzugt kommen die Materialien in Form von Fasermaterialien zur Anwendung, insbesondere in Form von Textilfasern, wie Garnen, Wickelkörpern und Geweben. Hierbei kann man analog bekannten Verfahrensweisen vorgehen.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die erfindungsgemäßen Verbindungen der Formel (1) lassen sich, gemäß der erfindungsgemäßen Anwendung, auf den genannten Substraten, insbesondere auf den genannten Fasermaterialien, nach den für wasserlösliche Farbstoffe, insbesondere faserreaktive Farbstoffe, bekannten Anwendungstechniken applizieren und fixieren, so beispielsweise, indem man die Azoverbindung der allgemeinen Formel (1) in gelöster Form auf das Substrat aufbringt oder sie darin einbringt und sie auf diesem oder in diesem, gegebenenfalls durch Hitzeeinwirkung und/oder gegebenenfalls durch Einwirkung eines alkalisch wirkenden Mittels, fixiert. Solche Färbe- und Fixierweisen sind in der Literatur zahlreich beschrieben.

So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, sehr gute Farbausbeuten sowie einen ausgezeichneten Farbaufbau. Man färbt bevorzugt in wäßrigem Bad bei Temperaturen zwischen 40 und 105°C, gegebenenfalls bei Temperaturen bis zu 130°C unter Druck, und gegebenenfalls in Gegenwart von üblichen Färbereihilfsmitteln.

Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen des Farbstoffes beschleunigenden Neutralsalze können dem Bade gewünschtenfalls auch erst nach Erreichen der eigentlichen Färbetemperatur zugesetzt werden.

Nach den Klotzverfahren werden auf Cellulosefasern ebenfalls gute Farbausbeuten und ein guter Farbaufbau erhalten, wobei durch Verweilen bei Raumtemperatur oder erhöhter Temperatur, beispielsweise bis zu etwa 60°C, durch Dämpfen oder mit Trockenhitze in üblicher Weise fixiert werden kann.

Ebenfalls nach den üblichen Druckverfahren für Cellulosefasern, die einphasig, beispielsweise durch Bedrucken mittels einer die erfindungsgemäße Verbindung und Natriumbicarbonat oder ein anderes säurebindendes Mittel enthaltenden Druckpaste und anschließendes Dämpfen bei 100 bis 103°C, oder zweiphasig, beispielsweise durch Bedrucken mittels einer die erfindungsgemäße Verbindung enthaltenden neutralen oder schwach sauren Druckpaste und anschließendes Fixieren der erfindungsgemäßen Verbindung entweder durch Hindurchführen des bedruckten Materials durch ein heißes alkali- und elektrolythaltiges Bad oder durch Überklotzen mit einer alkalischen elektrolythaltigen Klotzflotte und anschließendes Verweilen dieses überklotzten Materials oder Dämpfen oder Behandlung mit Trockenhitze, durchgeführt werden können, erhält man farbstarke Drucke mit gutem Stand der Konturen und einem klaren Weißfond. Der Ausfall der Drucke ist von wechselnden Fixierbedingungen nur wenig abhängig. Sowohl in der Färberei als auch in der Druckerei sind die mit den erfindungsgemäßen Verbindungen erhaltenen Fixiergrade sehr hoch.

Bei der Fixierung mittels Trockenhitze nach den üblichen Thermofixierverfahren verwendet man Heißluft von 120 bis 200°C. Bei der Fixierung mittels Wasserdampf kann neben dem üblichen Wasserdampf von 101 bis 103°C auch überhitzter Dampf und Druckdampf von Temperaturen bis zu 160°C eingesetzt werden.

Die säurebindenden und die Fixierung der Verbindung der Formel (1) auf den Cellulosefasern bewirkenden Mittel sind beispielsweise wasserlösliche basische Salze der Alkalimetalle und Erdalkalimetalle von organischen oder anorganischen Säuren oder Verbindungen, die in der Hitze Alkali freisetzen. Insbesondere sind die Alkalimetallhydroxide und Alkalimetallsalze von schwach bis mittelstarken anorganischen oder organischen Säuren zu nennen, vorzugsweise deren Natrium- und Kaliumverbindungen. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas und Trinatriumphosphat.

Durch die Behandlung der erfindungsgemäßen Verbindungen (Farbstoffe) mit den säurebindenden Mitteln, gegebenenfalls unter Wärmeeinwirkung, werden diese chemisch an die Cellulosefaser gebunden; insbesondere die Cellulosefärbungen zeigen nach der üblichen Nachbehandlung durch Spülen zur Entfernung von nicht fixierten Farbstoffanteilen ausgezeichnete Naßechtheiten, zumal sich nicht fixierte Farbstoffanteile wegen ihrer guten Kaltwasserlöslichkeit auswaschen lassen.

Die mit den erfindungsgemäßen Verbindungen (Farbstoffen) hergestellten Färbungen und Drucke auf Cellulosematerialien besitzen eine hohe Farbstärke, gute Lichtechtheiten und gute bis sehr gute Naßechtheiten, wie beispielsweise gute bis sehr gute Waschechtheiten bei 60 bis 95°C, auch in Gegenwart von Perboraten, saure und alkalische Walk-, Überfärbe- und Schweißechtheiten, gute bis sehr gute saure und alkalische Schweißechtheiten, eine hohe Dampfbeständigkeit, gute bis sehr gute Alkali-, Säure-, Wasser- und Seewasserechtheiten, desweiteren eine gute Plissierechtheit, Bügelechtheit und Reibechtheit. Ebenso besitzen sie eine sehr gute Säurelagerbeständigkeit ("acid fading") beim Lagern von feuchten, noch Essigsäure enthaltendem gefärbtem Material (s. hierzu deutsche Auslegeschrift Nr. 2 322 236).

Besonders hervorzuheben sind die guten Naßlichtechtheiten der mit destilliertem Wasser oder Trinkwasser befeuchteten Färbungen und Drucke auf Cellulosefasermaterialien sowie deren alkalische Schweißlichtechtheit. Diesbezüglich sind die erfindungsgemäßen Farbstoffe den anfangs erwähnten bekannten und konstitutionell nächst vergleichbaren faserreaktiven Farbstoffen, die als Reaktivgruppe ebenfalls einen Monochlortriazin-Rest und eine faserreaktive Gruppe der Vinylsulfon-Reihe enthalten, in überraschender Weise überlegen.

Die Färbungen auf Polyurethanfasern oder natürlichen oder synthetischen Polyamidfasern werden üblicherweise aus saurem Milieu ausgeführt. So kann man beispielsweise dem Färbebad Essigsäure und/oder Ammoniumsulfat, Natriumacetat und/oder Ammoniumacetat zufügen, um den gewünschten pH-Wert zu erhalten. Zwecks Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure und/oder einer Aminonaphthalinsulfonsäure oder auf Basis eines Umsetzungsproduktes von beispielsweise Stearylamin mit Ethylenoxid. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98°C durchgeführt. Die Färbungen können aber auch bei Siedetemperatur oder bei Temperaturen bis zu 120°C (unter Druck) ausgeführt werden.

Das Verfahren des Färbens auf Wolle erfolgt hierbei in üblicher und bekannter Färbeweise, indem die faserreaktive Verbindung der allgemeinen Formel (1) bevorzugt zunächst aus saurem Färbebad mit

einem pH von etwa 3,5 bis 5,5 unter Kontrolle des pH-Wertes dem Ausziehprozeß unterworfen wird und gegen Ende der Färbezeit der pH-Wert in den neutralen und gegebenenfalls schwach alkalischen Bereich bis zu einem pH-Wert von 8,5 verschoben wird, um besonders bei einer erwünschten Erzielung von hohen Farbtiefen die volle reaktive Bindung zwischen diesem Farbstoff der Formel (1) und der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien aus anderen natürlichen Polyamiden oder aus synthetischen Polyamiden und Polyurethanen. Die Färbungen werden bei Temperaturen von 60 bis 100°C durchgeführt, jedoch können sie auch in geschlossenen Färbeapparaturen bei Temperaturen bis zu 106°C erfolgen. Da die Wasserlöslichkeit der Verbindungen der allgemeinen Formel (1) sehr gut ist, lassen sie sich auch mit Vorteil bei üblichen kontinuierlichen Färbeverfahren einsetzen. Die Farbstärke der erfindungsgemäßen Verbindungen der allgemeinen Formel (1) ist sehr hoch. Sie liefern auf den Fasermaterialien, insbesondere beim reaktiven Färben von Wolle, farbstarke, echte Färbungen. Bei Anwendung von Färbetemperaturen von 100 bis 106°C ist eine hohe Baderschöpfung festzustellen.

Bei den mit den erfindungsgemäßen Verbindungen der allgemeinen Formel (1) erhältlichen Färbungen kann auf eine ansonsten übliche ammoniakalische Nachbehandlung der gefärbten Ware verzichtet werden. Im Vergleich zu konstitutionell ähnlichen bekannten Farbstoffen zeigen sie in überraschender Weise einen sehr guten Farbaufbau, wobei die brillante Nuance in tiefen Tönen erhalten bleibt. Darüber hinaus zeigen sie eine gute Kombinierbarkeit mit anderen fassereaktiven Wollfarbstoffen, die ein überraschend egales Färben der Faser ermöglichen. Ebenso läßt sich Material aus Wollfasern unterschiedlicher Provenienz mit der erfindungsgemäßen Verbindung egal färben. Zur Verbesserung des Egalisierverhaltens kann gegebenenfalls ein übliches Egalisierhilfsmittel, wie beispielsweise N-Methyltaurin, zugesetzt werden.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, wie Natrium- oder Kaliumsalze, in die Synthese eingesetzt werden.

Beispiel 1

Man diazotiert in üblicher Weise 56 Teile Anilin-4-β-sulfatoethylsulfon in einem Gemisch aus 500 Teilen Eiswasser und 45 Teilen konzentrierter wäßriger Salzsäure mit 40 Volumenteilen einer wäßrigen 5n Natriumnitritlösung. Die Diazoniumsalzlösung gibt man bei einem pH-Wert von 5,5 bis 6,0 langsam in eine Lösung einer Kupplungskomponente, die wie folgt hergestellt wird: Eine Lösung mit einem pH-Wert zwischen 4,5 und 5,0 und einer Temperatur zwischen 5 und 10°C von 62 Teilen 1-Amino-3,6-disulfo-8-naphthol in 600 Teilen Wasser wird unter Rühren portionsweise mit 36 Teilen Cyanurchlorid versetzt; der pH wird mit Natriumhydrogencarbonat bei 2,0 gehalten. Der Ansatz wird noch 4 Stunden bei einer Temperatur zwischen 5 und 10°C und einem pH-Wert von 2 weitergerührt.

Man rührt danach noch zwei Stunden bis zur vollständigen Kupplung bei einem pH-Wert zwischen 5,5 und 6 nach. Anschließend gibt man 84 Teile 1-Nitro-2-(4'-aminophenylamino)-5-(β-sulfatoethylsulfonyl)-benzol hinzu, hält den pH-Wert zwischen 5,5 und 6 und die Reaktionstemperatur bei 25°C und rührt unter diesen Bedingungen noch etwa 8 Stunden nach.

Die erfindungsgemäße Verbindung wird in üblicher Weise isoliert. Man erhält als rotes elektrolythaltiges Pulver das Natriumsalz der Verbindung der Formel

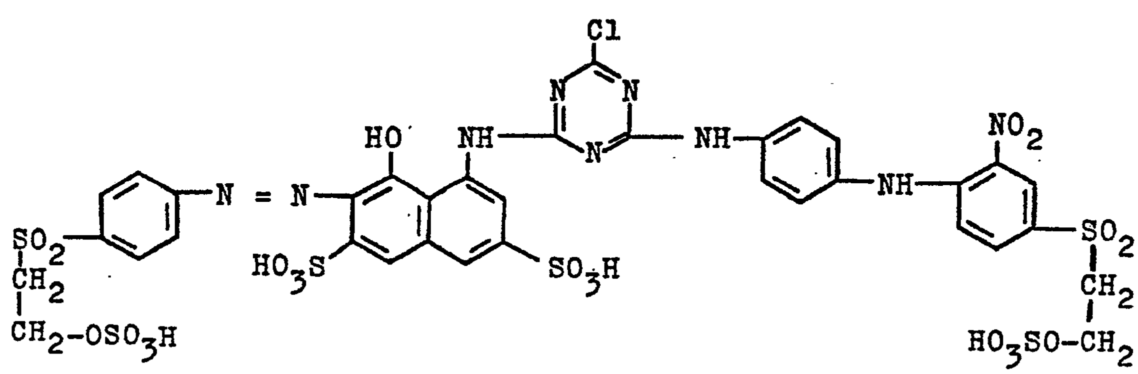

die sehr gute faserreaktive Farbstoffeigenschaften zeigt. Sie besitzt in wäßriger Lösung ein Absorptionsmaximum bei 515 nm und liefert nach den in der Technik üblichen Applikations- und Fixiermethoden, beispielsweise aus wäßrigalkalischer Flotte nach den üblichen Auszieh- oder Klotzverfahren, farbstarke gelbstichig rote Färbungen auf Baumwolle, die sehr gute Echtheiten, insbesondere sehr gute Waschechtheiten aufweisen.

Beispiele 2 bis 19

In den nachfolgenden Tabellenbeispielen sind weitere erfindungsgemäße Azoverbindungen entsprechend einer allgemeinen Formel (A)

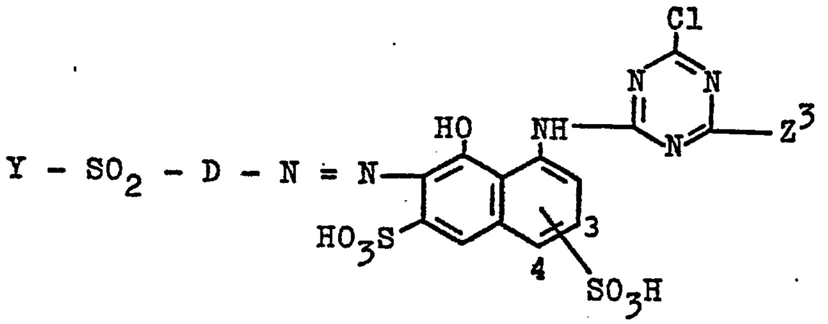

(A)

beschrieben, in welcher D dem Rest des aromatischen Amins $Y-SO_2-D-NH_2$ der Diazokomponente und $Z^3$ dem Amino-Rest des Amino-nitro-diphenylamins der in der Beschreibung genannten allgemeinen Formel (8) entspricht. Sie lassen sich in erfindungsgemäßer Weise, beispielsweise analog dem obigen Ausführungsbeispiel 1, aus den aus der Formel ersichtlichen Komponenten (wie der Diazoniumverbindung des aromatischen Amins, der Aminonaphtholsulfonsäure, Cyanurchlorid und der Amino-nitro-diphenylamin-Verbindung H-$Z^3$ entsprechend der allgemeinen Formel (8)) herstellen. Sie besitzen sehr gute faserreaktive Farbstoffeigenschaften und liefern auf den in der Beschreibung genannten Materialien, wie insbesondere Cellulosefasermaterialien, nach den in der Technik üblichen Anwendungsmethoden, vorzugsweise nach den für faserreaktive Farbstoffe üblichen Applikations- und Fixiermethoden, farbstarke Färbungen und Drucke mit guten Echtheiten, wie beispielsweise den im Beispiel 1 angegebenen Echtheiten, in dem in dem jeweiligen Tabellenbeispiel angegebenen Farbton auf Baumwolle.

Azoverbindung entsprechend der Formel (A)

| Bsp. | Aromat. Amin $Y-S_2-D-NH_2$ | Stellung der Sulfogruppe | Amino-diphenylamin $H-Z^3$ entsprechend der Formel (8) | Farbton |
|---|---|---|---|---|
| 2 | 3-(β-Sulfatoethylsulfonyl)-anilin | 3- | 1-Nitro-2-(4'-aminophenylamino)-5-(β-sulfatoethylsulfonyl)-benzol | rot |
| 3 | 2-Methoxy-5-(β-sulfatoethylsulfonyl)-anilin | 3- | 1-Nitro-2-(4'-aminophenylamino)-5-(β-sulfatoethylsulfonyl)-benzol | rot |
| 4 | 2,5-Dimethoxy-4-(β-sulfatoethylsulfonyl)-anilin | 3- | 1-Nitro-2-(4'-aminophenylamino)-5-(β-sulfatoethylsulfonyl)-benzol | rot |
| 5 | 2-Carboxy-5-(β-sulfatoethylsulfonyl)-anilin | 3- | 1-Nitro-2-(4'-aminophenylamino)-5-(β-sulfatoethylsulfonyl)-benzol | rot |
| 6 | 2-Sulfo-5-(β-sulfatoethylsulfonyl)-anilin | 3- | 1-Nitro-2-(4'-aminophenylamino)-5-(β-sulfatoethylsulfonyl)-benzol | rot |
| 7 | 2-Brom-4-(β-sulfatoethylsulfonyl)-anilin | 3- | 1-Nitro-2-(4'-aminophenylamino)-5-(β-sulfatoethylsulfonyl)-benzol | rot |
| 8 | 1-Sulfo-6-(β-sulfatoethylsulfonyl)-2-aminonaphthalin | 3- | 1-Nitro-2-(4'-aminophenylamino)-5-(β-sulfatoethylsulfonyl)-benzol | rot |
| 9 | 4-(β-Sulfatoethylsulfonyl)-anilin | 4- | 1-Nitro-2-(4'-aminophenylamino)-5-(β-sulfatoethylsulfonyl)-benzol | rot |
| 10 | 2-Sulfo-5-(β-sulfatoethylsulfonyl)-anilin | 4- | 1-Nitro-2-(4'-aminophenylamino)-5-(β-sulfatoethylsulfonyl)-benzol | rot |
| 11 | 4-(β-Sulfatoethylsulfonyl)-anilin | 3- | 1-Nitro-4-(4'-aminophenylamino)-5-(β-sulfatoethylsulfonyl)-benzol | rot |
| 12 | 2-Sulfo-5-(β-sulfatoethylsulfonyl)-anilin | 3- | 1-Nitro-4-(4'-aminophenylamino)-5-(β-sulfatoethylsulfonyl)-benzol | rot |
| 13 | 3-(β-Sulfatoethylsulfonyl)-anilin | 3- | 1-Nitro-4-(4'-aminophenylamino)-5-(β-sulfatoethylsulfonyl)-benzol | rot |
| 14 | 3-(β-Sulfatoethylsulfonyl)-anilin | 4- | 1-Nitro-4-(4'-aminophenylamino)-5-(β-sulfatoethylsulfonyl)-benzol | rot |
| 15 | 4-β-Sulfatoethylsulfonyl)-anilin | 4- | 1-Nitro-4-(4'-aminophenylamino)-5-(β-sulfatoethylsulfonyl)-benzol | rot |

Beispiele 16 bis 21

In den nachfolgenden Tabellenbeispielen sind weitere erfindungsgemäße Azoverbindungen entsprechend einer allgemeinen Formel (B)

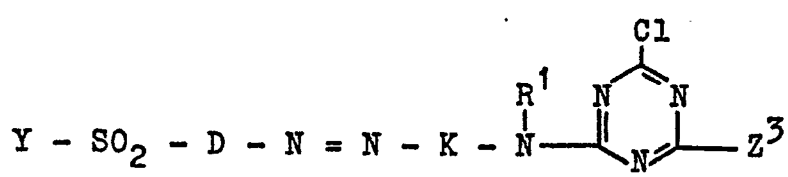

(B)

unter Angabe des aromatischen Amins $Y-SO_2-D-NH_2$ der Diazokomponente, des Restes $-K-NHR^1$ einer Kupplungskomponente und des Amino-Restes $Z^3$ des Aminonitro-diphenylamins der in der Beschreibung genannten allgemeinen Formel (8) beschrieben. Sie lassen sich in erfindungsgemäßer Weise, beispielsweise analog einem der obigen Ausführungsbeispiele, aus den aus der Formel ersichtlichen Komponenten (wie der Diazoniumverbindung des aromatischen Amins, der Kupplungskomponente, Cyanurchlorid und der Aminonitro-diphenylamin-Verbindung $H-Z^3$ gemäß der in der Beschreibung genannten allgemeinen Formel (8)) herstellen. Sie besitzen sehr gute faserreaktive Farbstoffeigenschaften und liefern auf den in der Beschreibung genannten Materialien, wie insbesondere Cellulosefasermaterialien, nach den in der Technik üblichen Anwendungsmethoden, vorzugsweise nach den für faserreaktive Farbstoffe üblichen Applikations- und Fixiermethoden, farbstarke Färbungen und Drucke mit

guten Echtheiten, wie beispielsweise den im Beispiel 1 angegebenen Echtheiten, in dem in dem jeweiligen Tabellenbeispiel angegebenen Farbton auf Baumwolle.

Azoverbindung entsprechend der Formel (B)

| Bsp. | Aromat. Amin $Y-SO_2-D-NH_2$ | Kupplungskomponente H–K–NHR | Amino-diphenylamin $H-Z^3$ entsprechend der Formel (8) | Farbton |
|---|---|---|---|---|
| 16 | 5-(β-Sulfatoethylsulfonyl)-2-sulfo-anilin | 2-Amino-5-naphthol-1-sulfonsäure | 1-Nitro-2-(4'-aminophenyl-methylamino)-5-(β-sulfatoethylsulfonyl)-benzol | orange |
| 17 | 4-(β-Sulfatoethylsulfonyl)-anilin | 2-Amino-5-naphthol-1,7-disulfonsäure | 1-Nitro-2-(4'-aminophenylamino)-5-(β-sulfatoethylsulfonyl)-benzol | orange |
| 18 | 4-(β-Sulfatoethylsulfonyl)-anilin | 3-Ureido-anilin | 1-Nitro-2-(4'-aminophenylamino)-5-(β-sulfatoethylsulfonyl)-benzol | goldgelb |
| 19 | 4-(β-Sulfatoethylsulfonyl)-anilin | 3-Ureido-anilin | 1-Nitro-4-(3'-aminophenylamino)-5-(β-sulfatoethylsulfonyl)-benzol | goldgelb |
| 20 | 4-(β-Sulfatoethylsulfonyl)-anilin | 3-Ureido-anilin | 1-Nitro-2-(4'-aminophenylamino)-5-(β-sulfatoethylsulfonyl)-benzol | goldgelb |
| 21 | 4-(β-Sulfatoethylsulfonyl)-anilin | 1-Naphthylamin-6-sulfonsäure | 1-Nitro-2-(4'-aminophenylamino)-5-(β-sulfatoethylsulfonyl)-benzol | rot |

Beispiele 22 bis 46

In den nachfolgenden Tabellenbeispielen sind weitere erfindungsgemäße Azoverbindungen entsprechend einer allgemeinen Formel (C)

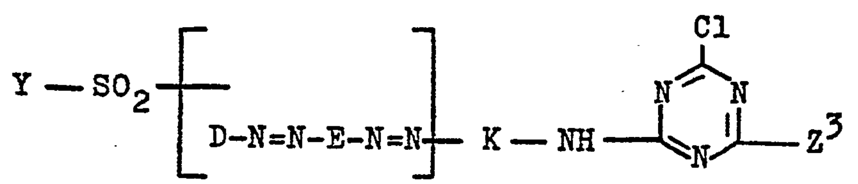

(C)

unter Angabe der diazotierbaren, als Diazokomponente wirkenden Amino-Azoverbindung der Formel

$$Y-SO_2-[D-N=N-E]_2-NH_2$$

, der Kupplungskomponente $H-K-NH_2$ und des Amino-Restes $Z^3$ des Aminonitro-diphenylamins der in der Beschreibung genannten allgemeinen Formel (8) beschrieben. Sie lassen sich in erfindungsgemäßer Weise, beispielsweise analog dem obigen Ausführungsbeispiel, aus den aus der Formel ersichtlichen Komponenten (wie der Diazoniumverbindung der aromatischen Amino-Azoverbindung, der Kupplungskomponente, Cyanurchlorid und der Aminonitro-diphenylamin-Verbindung $H-Z^3$ gemäß der in der Beschreibung genannten allgemeinen Formel (8)) herstellen. Sie besitzen sehr gute faserreaktive Farbstoffeigenschaften und liefern auf den in der Beschreibung genannten Materialien, wie insbesondere Cellulosefasermaterialien, nach den in der Technik üblichen Anwendungsmethoden, vorzugsweise nach den für faserreaktive Farbstoffe üblichen Applikations- und Fixiermethoden, farbstarke Färbungen und Drucke mit guten Echtheiten, wie beispielsweise den im Beispiel 1 angegebenen Echtheiten, in dem in dem jeweiligen Tabellenbeispiel angegebenen Farbton auf Baumwolle.

Azoverbindung entsrechend der Formel (C)

| Bsp. | Amino-Disazoverbindung Y–$SO_2$–[–D–N=N–E–]–$NH_2$ | Kupplungskomponente H–K–$NH_2$ | Amino-diphenylamin H–$Z^3$ entsprechend Formel (8) | Farbton |
|---|---|---|---|---|
| 22 | 4-(3'-β-Sulfatoethylsulfonyl-phenyl-azo)-6-sulfo-1-amino-naphthalin | 1-Naphthylamin-8-sulfonsäure | 1-Nitro-2-(4'-aminophenylamino)-5-(β-sulfatoethylsulfonyl)-benzol | braun |
| 23 | 4-(3'-β-Sulfatoethylsulfonyl-phenyl-azo)-6-sulfo-1-amino-naphthalin | 1-Naphthylamin-6-sulfonsäure | 1-Nitro-2-(4'-aminophenylamino)-5-(β-sulfatoethylsulfonyl)-benzol | braun |
| 24 | 4-(3'-β-Sulfatoethylsulfonyl-phenyl-azo)-6-sulfo-1-amino-naphthalin | 1-Naphthylamin-6-sulfonsäure | 1-Nitro-4-(4'-aminophenylamino)-5-(β-sulfatoethylsulfonyl)-benzol | braun |
| 25 | 4-(4'-β-Sulfatoethylsulfonyl-phenyl-azo)-6-sulfo-1-amino-naphthalin | 1-Naphthylamin-8-sulfonsäure | 1-Nitro-2-(4'-aminophenylamino)-5-(β-sulfatoethylsulfonyl)-benzol | braun |
| 26 | 4-(2'-Methoxy-5'-β-sulfato-ethylsulfonyl-phenyl-azo)-6-sulfo-1-aminonaphthalin | 1-Naphthylamin-8-sulfonsäure | 1-Nitro-2-(4'-aminophenylamino)-5-(β-sulfatoethylsulfonyl)-benzol | braun |
| 27 | 4-(2'-Methoxy-5'-β-sulfato-ethylsulfonyl-phenyl-azo)-6-sulfo-1-aminonaphthalin | 1-Naphthylamin-6-sulfonsäure | 1-Nitro-4-(4'aminophenylamino)-5-(β-sulfatoethylsulfonyl)-benzol | braun |
| 28 | 4-(2'-Carboxy-5'-β-sulfato-ethylsulfonyl-phenyl-azo)-6-sulfo-1-aminonaphthalin | 3-Amino-phenyl-harnstoff | 1-Nitro-2-(4'-aminophenylamino)-5-(β-sulfatoethylsulfonyl)-benzol | braun |
| 29 | 4-(6'-Sulfo-8'-β-sulfato-ethylsulfonyl-naphthyl-1'-azo)-6-sulfo-1-aminonaphthalin | 1-Naphthylamin-8-sulfonsäure | 1-Nitro-2-(4'-aminophenylamino)-5-(β-sulfatoethylsulfonyl)-benzol | rot-braun |
| 30 | 4-(6'-Sulfo-8'-β-sulfatoethyl-sulfonyl-naphthyl-1'-azo)-6-sulfo-1-aminonaphthalin | 3-Methyl-anilin | 1-Nitro-2-(4'-aminophenylamino)-5-(β-sulfatoethylsulfonyl)-benzol | braun |
| 31 | 4-(2'-Sulfo-4'-β-sulfatoethyl-sulfonyl-phenyl-azo)-2-methyl-5-methoxy-anilin | 3-Amino-phenyl-harnstoff | 1-Nitro-2-(4'-aminophenylamino)-5-(β-sulfatoethylsulfonyl)-benzol | gelb-braun |
| 32 | 4-(2'-Sulfo-4'-β-sulfatoethyl-sulfonyl-phenyl-azo)-2-methyl-5-methoxy-anilin | 1-Naphthylamin-8-sulfonsäure | 1-Nitro-2-(4'-aminophenylamino)-5-(β-sulfatoethylsulfonyl)-benzol | gelb-braun |
| 33 | 4-(2'-Methoxy-5'-methyl-4'-β-sulfatoethylsulfonyl-phenyl-azo)-6-sulfo-1-naphthylamin | 1-Naphthylamin-8-sulfonsäure | 1-Nitro-2-(4'-aminophenylamino)-5-(β-sulfatoethylsulfonyl)-benzol | braun |
| 34 | 4-(2'-Methoxy-5'-methyl-4'-β-sulfatoethylsulfonyl-phenyl-azo)-6-sulfo-1-naphthylamin | 3-Amino-phenyl-harnstoff | 1-Nitro-2-(4'-aminophenylamino)-5-(β-sulfatoethylsulfonyl)-benzol | gelb-braun |
| 35 | 4-(2',5'-Dimethoxy-4'-β-sulfatoethylsulfonyl-phenyl-azo)-6-sulfo-1-naphthylamin | 1-Naphthylamin-7-sulfonsäure | 1-Nitro-2-(4'-aminophenylamino)-5-(β-sulfatoethylsulfonyl)-benzol | braun |
| 36 | 4-2',5'-Dimethoxy-4'-β-sulfatoethylsulfonyl-phenyl-azo)-6-sulfo-1-naphthylamin | 1-Naphthylamin-8-sulfonsäure | 1-Nitro-2-(4'-aminophenylamino)-5-(β-sulfatoethylsulfonyl)-benzol | braun |
| 37 | 4-2',5'-Dimethoxy-4'-β-sulfatoethylsulfonyl-phenyl-azo)-6-sulfo-1-naphthylamin | 2,5-Disulfo-anilin | 1-Nitro-2-(4'-aminophenylamino)-5-(β-sulfatoethylsulfonyl)-benzol | gelb-braun |
| 38 | 4-4',8'-Disulfo-naphthyl-2'-azo)-6-β-sulfatoethylsulfonyl-1-aminonaphthalin | 1-Naphthylamin-8-sulfonsäure | 1-Nitro-2-(4'-aminophenylamino)-5-(β-sulfatoethylsulfonyl)-benzol | rot-braun |
| 39 | 4-(4',8'-Disulfo-naphthyl-2'-azo)-6-β-sulfatoethylsulfonyl-1-aminonaphthalin | 3-Methylanilin | 1-Nitro-2-(4'-aminophenylamino)-5-(β-sulfatoethylsulfonyl)-benzol | braun |
| 40 | 4-(4',8'-Disulfo-naphthyl-2'-azo)-6-β-sulfatoethylsulfonyl-1-aminonaphthalin | 3-Amino-phenyl-harnstoff | 1-Nitro-2-(4'-aminophenylamino)-5-(β-sulfatoethylsulfonyl)-benzol | braun |

| | | | | |
|---|---|---|---|---|
| 41 | 4-(4',8'-Disulfo-naphthyl-2'-azo)-6-β-sulfatoethylsulfonyl-1-aminonaphthalin | 3-Amino-phenyl-harnstoff | 1-Nitro-4-(4'-aminophenylamino)-5-(β-sulfatoethylsulfonyl)-benzol | braun |
| 42 | 4-(4',8'-Disulfo-naphthyl-2'-azo)-6-β-sulfatoethylsulfonyl-1-aminonaphthalin | 3-Methyl-anilin | 1-Nitro-4-(4'-aminophenylamino)-5-(β-sulfatoethylsulfonyl)-benzol | braun |
| 43 | 4-(2',5'-Disulfo-phenyl-azo)-6-β-sulfatoethylsulfonly)-1-aminonaphthalin | 1-Naphthylamin-8-sulfonsäure | 1-Nitro-2-(4'-aminophenylamino)-5-(β-sulfatoethylsulfonyl)-benzol | braun |
| 44 | 4-(2',5'-Disulfo-phenyl-azo)-6-β-sulfatoethylsulfonly)-1-aminonaphthalin | 3-Amino-phenyl-harnstoff | 1-Nitro-2-(4'-aminophenylamino)-5-(β-sulfatoethylsulfonyl)-benzol | gelb-braun |
| 45 | 4-(2',5'-Disulfo-phenyl-azo)-6-β-sulfatoethylsulfonly)-1-aminonaphthalin | 3-Methyl-anilin | 1-Nitro-4-(4'-aminophenylamino)-5-(β-sulfatoethylsulfonyl)-benzol | gelb-braun |
| 46 | 4-(2'-Carboxy-5'-β-sulfato-ethylsulfonyl-phenyl-azo)-6-sulfo-1-aminonaphthalin | 1-Naphthylamin-8-sulfonsäure | 1-Nitro-2-(4'-aminophenylamino)-5-(β-sulfatoethylsulfonyl)-benzol | braun |

## Patentansprüche

1. Eine wasserlösliche Azoverbindung entsprechend der allgemeinen Formel (1)

$$Y - SO_2 - \left[ D - N = N - \left( E - N = N \right)_k \right] - K - Z \qquad (1)$$

in welcher bedeuten:
k ist die Zahl Null oder 1;
die Gruppe $-SO_2-Y$ ist zwingend an ein C-Atom eines aromatischen Kernes von D oder eines aromatischen Kernes von E oder eines Benzolkernes eines Substituenten von D gebunden;
D ist der Phenylrest, der durch 1, 2 oder 3 Substituenten substituiert sein kann, die der Gruppe der Substituenten Alkyl von 1 bis 4 C-Atomen, Alkoxy von 1 bis 4 C-Atomen, Carboxy, Alkanoylamino von 2 bis 5 C-Atomen, das durch Chlor, Brom, Sulfo, Sulfato, Carboxy und Hydroxy substituiert sein kann, Benzoylamino, Sulfobenzoylamino, Phenylamino, Sulfophenylamino, Carbamoyl, durch Alkyl von 1 bis 4 C-Atomen mono- oder disubstituiertes Crbamoyl, Sulfamoyl, durch Alkyl von 1 bis 4 C-Atomen mono- oder disubstituiertes Sulfamoyl, N-Phenylsulfamoyl, N-Phenyl-N-($C_1$–$C_4$-alkyl)-sulfamoyl, Cyan, Nitro, Chlor, Brom, Fluor, Trifluormethyl, Hydroxy und Sulfo angehören, oder
D ist ein Naphthylrest, der durch 1, 2 oder 3 Substituenten substituiert sein kann, die der Gruppe der Substituenten Sulfo, Carboxy, Methyl, Ethyl, Methoxy, Ethoxy, Alkanoylamino von 2 bis 5 C-Atomen, das durch Chlor, Brom, Sulfo, Sulfato, Carboxy und Hydroxy substituiert sein kann, Benzoylamino, Sulfobenzoylamino, Chlor, Hydroxy und Nitro angehören, oder
D ist der Phenylrest, der durch die angegebene Gruppe $-SO_2-Y$ substituiert ist und weiterhin durch 1 oder 2 Substituenten substituiert sein kann, die der Gruppe der Substituenten Alkyl von 1 bis 4 C-Atomen, Alkoxy von 1 bis 4 C-Atomen, Carboxy, Alkanoylamino von 2 bis 5 C-Atomen, das durch Chlor, Brom, Sulfo, Sulfato, Carboxy und Hydroxy substituiert sein kann, Benzoylamino, Sulfobenzoylamino, Phenylamino, Sulfophenylamino, Carbamoyl, durch Alkyl von 1 bis 4 C-Atomen mono- oder disubstituiertes Carbamoyl, Sulfamoyl, durch Alkyl von 1 bis 4 C-Atomen mono- oder disubstituiertes Sulfamoyl, N-Phenylsulfamoyl, N-Phenyl-N-($C_1$–$C_4$-alkyl)-sulfamoyl, Cyan, Nitro, Chlor, Brom, Fluor, Trifluormethyl, Hydroxy und Sulfo angehören, oder
D ist ein Naphthylrest, der durch die angegebene Gruppe $-SO_2-Y$ substituiert ist und weiterhin durch 1 oder 2 Substituenten substituiert sein kann, die der Gruppe der Substituenten Sulfo, Carboxy, Methyl, Ethyl, Methoxy, Ethoxy, Alkanoylamino von 2 bis 5 C-Atomen, das durch Chlor, Brom, Sulfo, Sulfato, Carboxy und Hydroxy substituiert sein kann, Benzoylamino, Sulfobenzoylamino, Chlor, Hydroxy und Nitro angehören;
E ist der Rest einer kupplungsfähigen und diazotierbaren Verbindung, die beim Aufbau der Verbindungen (1) zunächst als Kupplungskomponente, dann als Diazokomponente dient, und einen Phenylenrest

darstellt, der durch einen oder zwei Substituenten substituiert sein kann, die aus der Menge von 2 Alkyl von 1 bis 4 C-Atomen, 2 Alkoxy von 1 bis 4 C-Atomen, 2 Chlor, 1 Brom, 1 Alkanoylamino von 2 bis 5 C-Atomen, das durch Chlor, Brom, Sulfo, Sulfato, Carboxy und Hydroxy substituiert sein kann, 1 Benzoylamino, 2 Sulfo, 1 Carboxy, 1 N,N-Dialkylamino mit Alkylgruppen von jeweils 1 bis 4 C-Atomen, 1 Ureido, 1 Phenylureido und 1 Alkylsulfonylamino von 1 bis 4 C-Atomen ausgewählt sind, oder

einen Naphthylenrest bedeutet, der durch 1 oder 2 Sulfogruppen oder eine Alkylgruppe von 1 bis 4 C-Atomen, eine Nitrogruppe, eine Alkanoylaminogruppe von 2 bis 5 C-Atomen oder eine Benzoylaminogruppe oder die angegebene Gruppe $-SO_2-Y$ oder durch 1 oder 2 Sulfogruppen und die angegebene Gruppe $-SO_2-Y$ substituiert sein kann oder der durch die angegebene Gruppe $-SO_2-Y$ und 1 oder 2 Sulfogruppen und eine Alkylgruppe von 1 bis 4 C-Atomen, eine Nitrogruppe, eine Alkanoylaminogruppe von 2 bis 5 C-Atomen oder eine benzoylaminogruppe substituiert sein kann, oder einen Naphthylenrest darstellt, der in ortho-Stellung zur Azogruppe des Restes $Y-SO_2-D-N=N-$ eine Aminogruppe, eine Alkylaminogruppe von 1 bis 4 C-Atomen oder eine gegebenenfalls durch Chlor, Alkyl von 1 bis 4 C-Atomen, Alkoxy von 1 bis 4 C-Atomen, Sulfo und/oder Carboxy substituierte Phenylaminogruppe oder eine Hydroxygruppe gebunden enthält und der zusätzlich durch eine oder zwei Sulfogruppen oder eine Alkylgruppe von 1 bis 4 C-Atomen, eine Nitrogruppe oder eine Alkanoylaminogruppe von 2 bis 5 C-Atomen oder zusätzlich durch eine oder zwei Sulfogruppen und eine Alkylgruppe von 1 bis 4 C-Atomen, Nitro- oder Alkanoylaminogruppe von 2 bis 5 C-Atomen substituiert sein kann;

K ist ein 1-Hydroxy-naphthylen-Rest, der in 2-Stellung die Azogruppe gebunden enthält, oder ist ein 2-Hydroxy-naphthylen-Rest, der in 1-Stellung die Azogruppe gebunden enthält, wobei beide durch 1 oder 2 Sulfogruppen oder durch eine gegebenenfalls durch Chlor, Brom, Sulfo, Sulfato, Carboxy und Hydroxy substituierte Alkanoylaminogruppe von 2 bis 5 C-Atomen oder eine Benzoylaminogruppe oder durch eine oder zwei Sulfogruppen und eine gegebenenfalls durch Chlor, Brom, Sulfo, Sulfato, Carboxy und Hydroxy substituierte Alkanoylaminogruppe von 2 bis 5 C-Atomen oder eine Benzoylaminogruppe substituiert sein können, oder

K ist ein Naphthylenrest, der durch 1 oder 2 Sulfogruppen oder durch 1 oder 2 Sulfogruppen und eine gegebenenfalls mono- oder disubstituierte Aminogruppe substituiert sein kann, wobei die Substituenten der Aminogruppen der Gruppe der Substituenten Alkyl von 1 bis 4 C-Atomen, Hydroxyalkyl von 1 bis 4 C-Atomen, Carboxyalkyl von 2 bis 5 C-Atomen, Sulfoalkyl von 1 bis 4 C-Atomen, Sulfatoalkyl von 1 bis 4 C-Atomen, Cyanoalkyl von 2 bis 5 C-Atomen, Carbalkoxyalkyl mit Alkylresten von jeweils 1 bis 4 C-Atomen, Phenylalkyl mit einem Alkylrest von 1 bis 4 C-Atomen, wobei der Phenylrest durch Methyl, Ethyl, Methoxy, Ethoxy, Chlor, Sulfo und/oder Carboxy substituiert sein kann, Phenyl und durch Alkyl von 1 bis 4 C-Atomen, Alkoxy von 1 bis 4 C-Atomen, Chlor, Carboxy und/oder Sulfo substituiertes Phenyl angehören, oder

K ist ein 1-Amino-naphthylen-Rest, der in 2-Stellung die Azogruppe gebunden enthält, oder ist ein 2-Aminonaphthylen-Rest, der in 1-Stellung die Azogruppe gebunden enthält, wobei beide Aminonaphthylenreste durch 1 oder 2 Sulfogruppen oder durch eine Hydroxygruppe in 5-, 6-, 7- oder 8-Stellung oder durch diese Hydroxygruppe und 1 oder 2 Sulfogruppen substituiert sein können, oder

K ist ein Phenylenrest, der durch 1 oder 2 Substituenten substituiert sein kann, die aus der nachfolgenden Menge von Substituenten ausgewählt sind: 2 Alkyl von 1 bis 4 C-Atomen, 2 Alkoxy von 1 bis 4 C-Atomen, 2 Chlor, 1 Brom, 1 Alkanoylamino von 2 bis 5 C-Atomen, das durch Chlor, Brom, Sulfo, Sulfato, Carboxy und Hydroxy substituiert sein kann, 1 Benzoylamino, 1 Sulfo, 1 Carboxy, 1 Ureido, 1 Phenylureido, 1 Alkylsulfonylamino von 1 bis 4 C-Atomen, 1 Amino und 1 mono- oder disubstituiertes Amino, dessen Substituenten Alkyl von 1 bis 4 C-Atomen, Hydroxyalkyl von 1 bis 4 C-Atomen, Carboxyalkyl von 2 bis 5 C-Atomen, Sulfoalkyl von 1 bis 4 C-Atomen, Sulfatoalkyl von 1 bis 4 C-Atomen, Cyanoalkyl von 2 bis 5 C-Atomen, Carbalkoxyalkyl mit Alkylresten von jeweils 1 bis 4 C-Atomen, Phenylalkyl mit einem Alkylrest von 1 bis 4 C-Atomen, wobei dessen Phenylrest durch Methyl, Ethyl, Methoxy, Ethoxy, Chlor, Carboxy und/oder Sulfo substituiert sein kann, Phenyl und durch Alkyl von 1 bis 4 C-Atomen, Alkoxy von 1 bis 4 C-Atomen, Chlor, Carboxy und/oder Sulfo substituiertes Phenyl sind;

Y ist die Vinylgruppe oder eine β-Thiosulfatoethyl-, β-Phosphatoethyl-, β-Chlorethyl- oder β-Sulfatoethyl-Gruppe;

Z ist ein Rest der allgemeinen Formel (3)

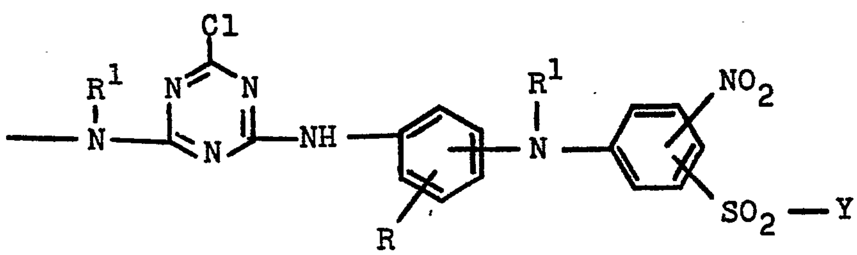

(3)

in welcher

$R^1$ für ein Wasserstoffatom oder eine Alkylgruppe von 1 bis 4 C-Atomen steht, die durch einen oder zwei Substituenten aus der Gruppe Acetylamino, Hydroxy, Sulfato, Alkoxy von 1 bis 4 C-Atomen, Sulfo und Carboxy substituiert sein kann, wobei beide $R^1$ zueinander gleiche oder voneinander verschiedene Bedeutungen besitzen können,
R ein Wasserstoffatom oder eine Sulfogruppe bedeutet und
Y die obengenannte Bedeutung hat, wobei beide Y zueinander gleiche oder voneinander verschiedene Bedeutungen besitzen können.

2. Verbindung nach Anspruch 1 der allgemeinen Formel (2)

$$Y - SO_2 - D_1 - N = N -(E_1 - N = N)_k- K - Z \qquad (2)$$

in welcher
$D_1$ ein Phenylenrest ist, der durch 1 oder 2 Substituenten substituiert sein kann, die der Gruppe der Substituenten Alkyl von 1 bis 4 C-Atomen, Alkoxy von 1 bis 4 C-Atomen, Carboxy, Alkanoylamino von 2 bis 5 C-Atomen, das durch Chlor, Brom, Sulfo, Sulfato, Carboxy und Hydroxy substituiert sein kann, Benzoylamino, Sulfobenzoylamino, Phenylamino, Sulfophenylamino, Carbamoyl, durch Alkyl von 1 bis 4 C-Atomen mono- oder disubstituiertes Carbamoyl, Sulfamoyl, durch Alkyl von 1 bis 4 C-Atomen mono- oder disubstituiertes Sulfamoyl, N-Phenylsulfamoyl, N-Phenyl-N-($C_1$–$C_4$-alkyl)-sulfamoyl, Cyan, Nitro, Chlor, Brom, Fluor, Trifluormethyl, Hydroxy und Sulfo angehören, oder
$D_1$ ein Naphthylenrest ist, der durch 1 oder 2 Substituenten substituiert sein kann, die der Gruppe der Substituenten Sulfo, Carboxy, Methyl, Ethyl, Methoxy, Ethoxy, Alkanoylamino von 2 bis 5 C-Atomen, das durch Chlor, Brom, Sulfo, Sulfato, Carboxy und Hydroxy substituiert sein kann, Benzoylamino, Sulfobenzoylamino, Chlor, Hydroxy und Nitro angehören, und
$E_1$ der Rest einer kupplungsfähigen und diazotierbaren Verbindung ist, die beim Aufbau der Verbindungen (1) zunächst als Kupplungskomponente, dann als Diazokomponente dient, und
einen Phenylenrest darstellt, der durch einen oder zwei Substituenten substituiert sein kann, die aus der Menge von 2 Alkyl von 1 bis 4 C-Atomen, 2 Alkoxy von 1 bis 4 C-Atomen, 2 Chlor, 1 Brom, 1 Alkanoylamino von 2 bis 5 C-Atomen, das durch Chlor, Brom, Sulfo, Sulfato, Carboxy und Hydroxy substituiert sein kann, 1 Benzoylamino, 2 Sulfo, 1 Carboxy, 1 N,N-Dialkylamino mit Alkylgruppen von jeweils 1 bis 4 C-Atomen, 1 Ureido, 1 Phenylureido und 1 Alkylsulfonylamino von 1 bis 4 C-Atomen ausgewählt sind,
oder einen Naphthylenrest bedeutet, der durch 1 oder 2 Sulfogruppen oder durch eine Alkylgruppe von 1 bis 4 C-Atomen, eine Nitrogruppe, eine Alkanoylaminogruppe von 2 bis 5 C-Atomen oder eine Benzoylaminogruppe oder durch 1 oder 2 Sulfogruppen und eine Alkylgruppe von 1 bis 4 C-Atomen, eine Nitrogruppe, Alkanoylaminogruppe von 2 bis 5 C-Atomen oder Benzoylaminogruppe substituiert sein kann,
oder einen Naphthylenrest darstellt, der in ortho-Stellung zur Azogruppe des Restes $Y–SO_2–D–N=N–$ eine Aminogruppe, eine Alkylaminogruppe von 1 bis 4 C-Atomen oder eine gegebenenfalls durch Chlor, Alkyl von 1 bis 4 C-Atomen, Alkoxy von 1 bis 4 C-Atomen, Sulfo und/oder Carboxy substituierte Phenylaminogruppe oder eine Hydroxygruppe gebunden enthält und der zusätzlich durch eine oder zwei Sulfogruppen oder eine Alkylgruppe von 1 bis 4 C-Atomen, eine Nitrogruppe, eine gegebenenfalls durch Chlor, Brom, Sulfo, Sulfato, Carboxy und Hydroxy substituierte Alkanoylaminogruppe von 2 bis 5 C-Atomen oder eine Benzoylaminogruppe oder zusätzlich durch eine oder zwei Sulfogruppen und eine Alkylgruppe von 1 bis 4 C-Atomen, eine Nitrogruppe, eine gegebenenfalls durch Chlor, Brom, Sulfo, Sulfato, Carboxy und Hydroxy substituierte Alkanoylaminogruppe von 2 bis 5 C-Atomen oder eine Benzoylaminogruppe substituiert sein kann, und
K, Y, Z und k die in Anspruch 1 angegebenen Bedeutungen haben.

3. Verbindung nach Anspruch 2, dadurch gekennzeichnet, daß $D_1$ ein Phenylenrest ist, der durch 1 oder 2 Substituenten aus der Gruppe Alkyl von 1 bis 4 C-Atomen, Alkoxy von 1 bis 4 C-Atomen, Chlor, Carboxy und Sulfo substituiert sein kann, oder ein Naphthylenrest ist, der durch 1 oder 2 Sulfogruppen substituiert sein kann.

4. Verbindung nach Anspruch 2, dadurch gekennzeichnet, daß $D_1$ ein Rest der Formel (4e), (4f) oder (4g)

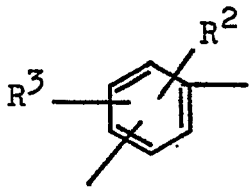

(4e)

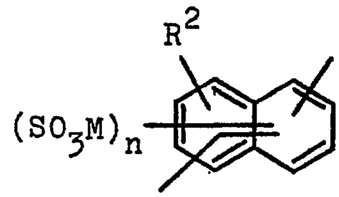

(4f)

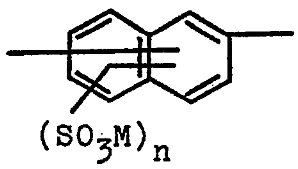

(4g)

in welchen
$R^2$ ein Wasserstoffatom, eine Alkylgruppe von 1 bis 4 C-Atomen, eine Alkoxygruppe von 1 bis 4 C-Atomen, ein Chloratom oder eine Carboxygruppe ist,
$R^3$ ein Wasserstoffatom, eine Alkylgruppe von 1 bis 4 C-Atomen, eine Alkoxygruppe von 1 bis 4 C-Atomen, ein Chloratom oder eine Sulfogruppe ist,
M ein Wasserstoffatom oder ein Alkalimetall bedeutet und
n für die Zahl 1 oder 2 steht.

5. Verbindung nach Anspruch 1, 2, 3 oder 4, dadurch gekennzeichnet, daß k die Zahl 1 bedeutet und E bzw. $E_1$ ein 1-Hydroxynaphthylen-Rest ist, der den Azorest $Y{-}SO_2{-}D{-}N{=}N{-}$ bzw. $Y{-}SO_2{-}D_1{-}N{=}N{-}$ in 2-Stellung gebunden enthält und durch 1 oder 2 Sulfogruppen substituiert ist, oder der 1,4-Phenylenrest ist, der durch eine Aminogruppe, eine Alkylaminogruppe von 1 bis 4 C-Atomen, Alkanoylaminogruppe von 2 bis 5 C-Atomen, Methyl-, Ethyl-, Carboxy-, Sulfo- oder Ureidogruppe oder ein Chloratom oder durch eine dieser Substituenten und durch eine Methyl-, Ethyl-, Methoxy-, Ethoxy- oder Sulfogruppe oder ein Chloratom substituiert sein kann, oder ein 1,4-Naphthylenrest ist, der durch eine Alkanoylaminogruppe von 2 bis 5 C-Atomen oder eine Benzoylaminogruppe und/oder eine oder zwei Sulfogruppen substituiert sein kann.

6. Verbindung nach einem der Ansprüche 1 bis 5, dadurch gekennzeichnet, daß $R^1$ ein Wasserstoffatom oder eine Methyl- oder Ethylgruppe ist.

7. Verbindung nach Anspruch 1 entsprechend der allgemeinen Formel

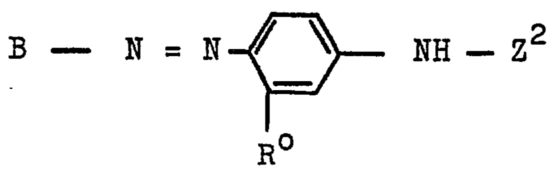

in welcher
B ein Rest der allgemeinen Formel (4b), (4c) oder (4d)

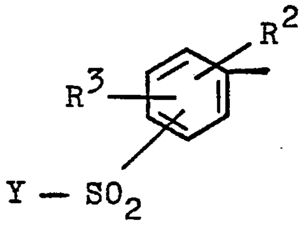

(4b)

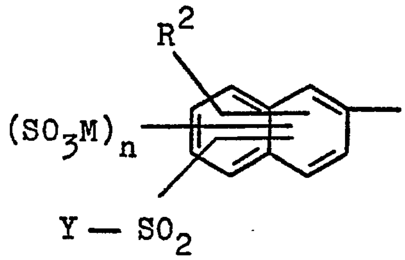

(4c)

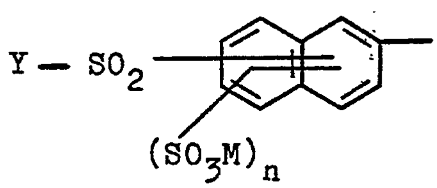

(4d)

in welchen

$R^2$ ein Bromatom, eine Nitrogruppe oder eine Alkanoylaminogruppe von 2 bis 5 C-Atomen, wie die Acetylaminogruppe, bevorzugt aber ein Wasserstoffatom, eine Alkylgruppe von 1 bis 4 C-Atomen, wie die Ethylgruppe und insbesondere die Methylgruppe, eine Alkoxygruppe von 1 bis 4 C-Atomen, wie die Ethoxygruppe und insbesondere die Methoxygruppe, ein Chloratom oder eine Carboxygruppe bedeutet,

$R^3$ ein Bromatom oder eine Hydroxygruppe, bevorzugt aber ein Wasserstoffatom, eine Alkylgruppe von 1 bis 4 C-Atomen, wie die Ethylgruppe und insbesondere die Methylgruppe, eine Alkoxygruppe von 1 bis 4 C-Atomen, wie die Ethoxygruppe und insbesondere die Methoxygruppe, ein Chloratom und eine Sulfogruppe ist und

Y die in Anspruch 1 genannte Bedeutung besitzt;

$R^o$ ist ein Wasserstoffatom, ein Chlor- oder Bromatom, eine Aminogruppe, eine Alkanoylaminogruppe von 2 bis 5 C-Atomen, eine Sulfo-, Carboxy-, Methyl-, Ethyl-, Methoxy- oder Ureidogruppe;

$Z^2$ ist ein Rest der allgemeinen Formel (3b)

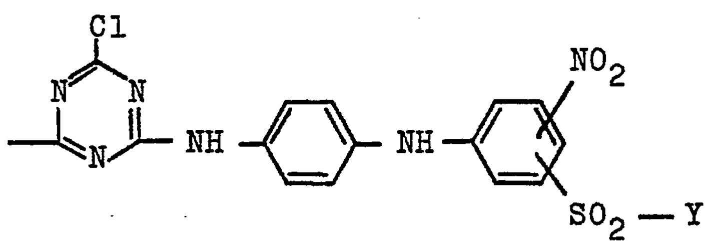

(3b)

in welcher Y die in Anspruch 1 genannte Bedeutung besitzt und die Gruppe $-SO_2-Y$ und die Nitrogruppe zueinander meta-ständig an den Benzolkern gebunden sind, jedoch beide nicht gleichzeitig ortho-ständig zur Aminogruppe stehen.

8. Verbindung nach Anspruch 1, dadurch gekennzeichnet, daß Z ein Rest der Formel $-NH-Z^2$ mit $Z^2$ der in Anspruch 7 angegebenen Bedeutung ist.

9. Verbindung nach Anspruch 1 der allgemeinen Formel

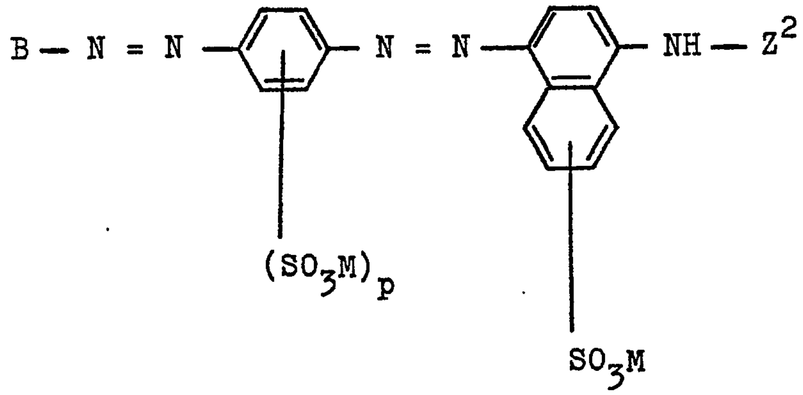

(14)

in welcher B und $Z^2$ die in Anspruch 7 genannten Bedeutungen haben, M für ein Wasserstoffatom oder ein Alkalimetall steht und p die Zahl Null, 1 oder 2 ist.

10. Verbindung nach Anspruch 1 der allgemeinen Formel

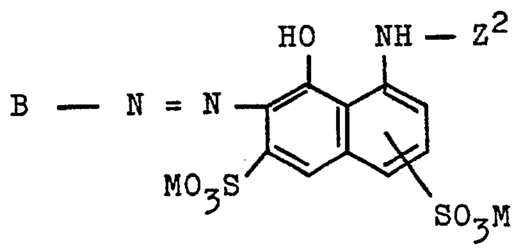

in welcher B und $Z^2$ die in Anspruch 7 genannten Bedeutungen haben und M ein Wasserstoffatom oder ein Alkalimetall bedeutet.

11. Verbindung nach Anspruch 1 der allgemeinen Formel

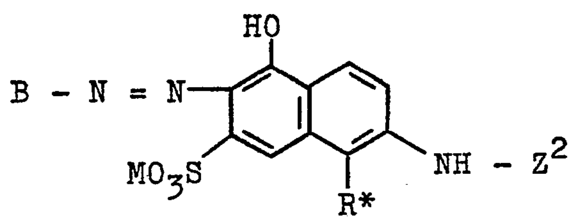

in welcher B und $Z^2$ die in Anspruch 7 genannten Bedeutungen haben, M für ein Wasserstoffatom oder ein Alkalimetall steht und R* ein Wasserstoffatom oder eine Sulfogruppe ist.

12. Verbindung nach Anspruch 1 der allgemeinen Formel

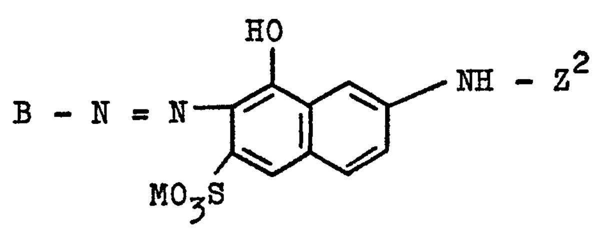

in welcher B und $Z^2$ die in Anspruch 7 genannten Bedeutungen haben und M für ein Wasserstoffatom oder ein Alkalimetall steht.

13. Verbindung nach Anspruch 1 der allgemeinen Formel

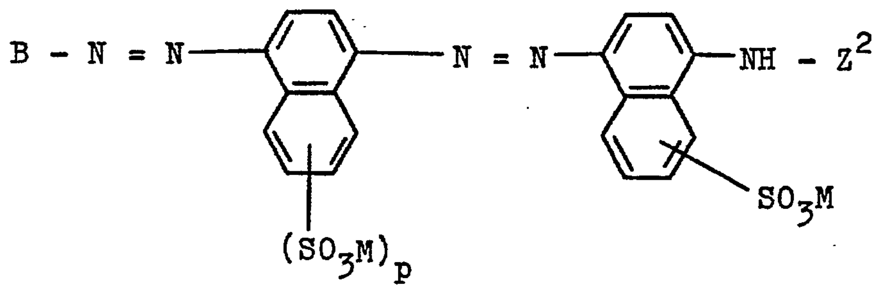

in welcher B und $Z^2$ die in Anspruch 7 genannten Bedeutungen haben, M für ein Wasserstoffatom oder ein Alkalimetall steht und p die Zahl Null, 1 oder 2 ist.

14. Verbindung nach einem der Ansprüche 1 bis 13, dadurch gekennzeichnet, daß Y die Vinylgruppe oder bevorzugt eine β-Sulfatoethyl-Gruppe bedeutet.

15. Verfahren zur Herstellung der in Anspruch 1 genannten und definierten Verbindungen der allgemeinen Formel (1), dadurch gekennzeichnet, daß man eine Verbindung der allgemeinen Formel (5)

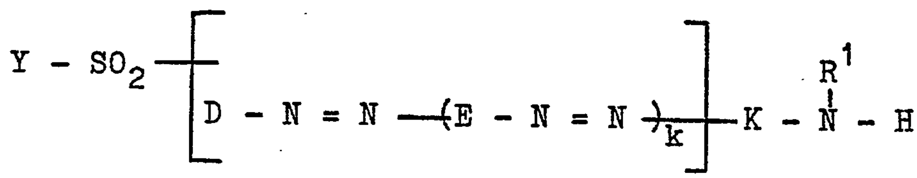 (5)

mit D, E, K, Y, k und $R^1$ der in Anspruch 1 genannten Bedeutungen mit einer Dichlortriazin-Verbindung der allgemeinen Formel (6)

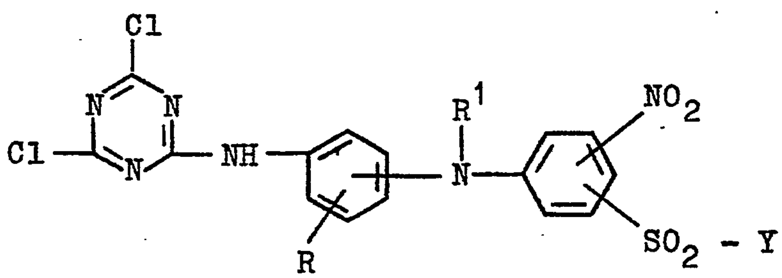 (6)

in welcher $R^1$, R und Y die in Anspruch 1 genannten Bedeutungen haben, unter Abspaltung eines Mols Chlorwasserstoff umsetzt, oder daß man eine Verbindung der allgemeinen Formel (7)

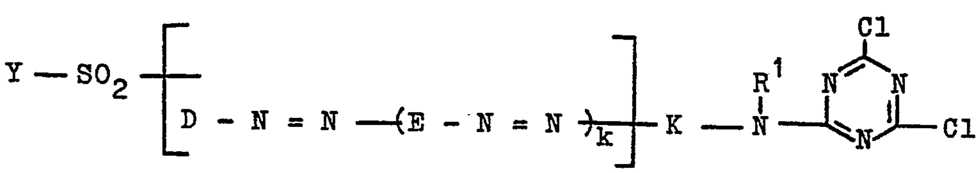 (7)

mit D, E, K, Y, k und $R^1$ der in Anspruch 1 genannten Bedeutung mit einer Aminodiphenylamin-Verbindung der allgemeinen Formel (8)

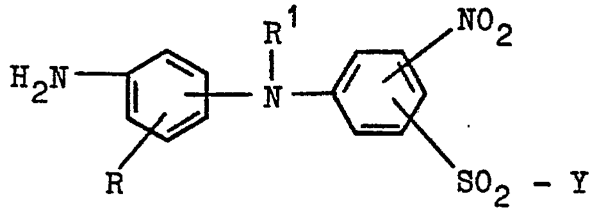 (8)

in welcher $R^1$, R und Y die in Anspruch 1 genannten Bedeutungen haben, unter Abspaltung eines Mols

Chlorwasserstoff umsetzt, oder
daß man eine Diazoniumverbindung eines Amins der allgemeinen Formel (11)

$$Y-SO_2\left[D-(N=N-E)_k\right]-NH_2 \qquad (11)$$

in welcher Y, D, E und k die für Formel (1) angegebenen Bedeutungen haben, mit einer kupplungsfähigen Verbindung der allgemeinen Formel H–K–Z mit K und Z der obengenannten Bedeutung kuppelt.

16. Verwendung der in Anspruch 1 genannten und definierten Verbindungen der allgemeinen Formel (1) oder der nach Anspruch 15 hergestellten Verbindungen der allgemeinen Formel (1) als Farbstoffe.

17. Verwendung nach Anspruch 16 zum Färben (Colorieren) von hydroxy- und/oder carbonamidgruppenhaltigem Material, insbesondere Fasermaterial.

18. Verfahren zum Färben (Colorieren) von hydroxy- und/oder carbonamidgruppenhaltigem Material, vorzugsweise Fasermaterial, bei welchem man einen Farbstoff auf das Material aufbringt oder in das Material einbringt und ihn mittels Wärme und/oder in Gegenwart eines säurebindenden Mittels fixiert, dadurch gekennzeichnet, daß man als Farbstoff eine Verbindung der in Anspruch 1 genannten und definierten allgemeinen Formel (1) oder eine gemäß nach Anspruch 15 hergestellte Verbindung der allgemeinen Formel (1) einsetzt.

## Claims

1. A water-soluble azo compound conforming to the general formula (1)

$$Y-SO_2\left[D-N=N-(E-N=N)_k\right]-K-Z \qquad (1)$$

in which the symbols have the following meanings:
k is the number zero or 1;
the $-SO_2-Y$ group is mandatorily bonded to a carbon atom of an aromatic nucleus of D or of an aromatic nucleus of E or of a benzene nucleus of a substituent of D;
D is the phenyl radical which can be substituted by 1, 2 or 3 substituents which belong to the group of substituents consisting of alkyl of 1 to 4 carbon atoms, alkoxy of 1 to 4 carbon atoms, carboxyl, alkanoylamino of 2 to 5 carbon atoms, which can be substituted by chlorine, bromine, sulfo, sulfato, carboxyl and hydroxyl, benzoylamino, sulfobenzoylamino, phenylamino, sulfophenylamino, carbamoyl, carbamoyl which is monosubstituted or disubstituted by alkyl of 1 to 4 carbon atoms, sulfamoyl, sulfamoyl which is monosubstituted or disubstituted by alkyl of 1 to 4 carbon atoms, N-phenylsulfamoyl, N-phenyl-N-($C_1$–$C_4$-alkyl)-sulfamoyl, cyano, nitro, chlorine, bromine, fluorine, trifluoromethyl, hydroxyl and sulfo, or
D is a naphthyl radical which can be substituted by 1, 2 or 3 substituents which belong to the group of substituents consisting of sulfo, carboxyl, methyl, ethyl, methoxy, ethoxy, alkanoylamino of 2 to 5 carbon atoms, which can be substituted by chlorine, bromine, sulfo, sulfato, carboxyl and hydroxyl, benzoylamino, sulfobenzoylamino, chlorine, hydroxyl and nitro, or
D is the phenyl radical which is substituted by the $-SO_2-Y$ group shown and can be further substituted by 1 or 2 substituents which belong to the group of substituents consisting of alkyl of 1 to 4 carbon atoms, alkoxy of 1 to 4 carbon atoms, carboxyl, alkanoylamino of 2 to 5 carbon atoms, which can be substituted by chlorine, bromine, sulfo, sulfato, carboxyl and hydroxyl, benzoylamino, sulfobenzoylamino, phenylamino, sulfophenylamino, carbamoyl, carbamoyl which is monosubstituted or disubstituted by alkyl of 1 to 4 carbon atoms, sulfamoyl, sulfamoyl which is monosubstituted or disubstituted by alkyl of 1 to 4 carbon atoms, N-phenylsulfamoyl, N-phenyl-N-($C_1$–$C_4$-alkyl)-sulfamoyl, cyano, nitro, chlorine, bromine, fluorine, trifluoromethyl, hydroxyl and sulfo, or
D is a naphthyl radical which is substituted by the $-SO_2-Y$ group shown and can be further substituted by 1 or 2 substituents which belong to the group of substituents consisting of sulfo, carboxyl, methyl, ethyl, methoxy, ethoxy, alkanoylamino of 2 to 5 carbon atoms, which can be substituted by chlorine, bromine, sulfo, sulfato, carboxyl and hydroxyl, benzoylamino, sulfobenzoylamino, chlorine, hydroxyl and nitro;

E is the radical of a couplable and diazotizable compound which in the synthesis of compounds (1) serves first as a coupling component and then as a diazo component, and represents a phenylene radical, which can be substituted by one or two substituents which are selected from the set consisting of 2 alkyl of 1 to 4 carbon atoms, 2 alkoxy of 1 to 4 carbon atoms, 2 chlorine, 1 bromine, 1 alkanoylamino of 2 to 5 carbon atoms, which can be substituted by chlorine, bromine, sulfo, sulfato, carboxyl and hydroxyl, 1 benzoylamino, 2 sulfo, 1 carboxyl, 1 N,N-dialkylamino having alkyl groups of 1 to 4 carbon atoms each, 1 ureido, 1 phenylureido and 1 alkylsulfonylamino of 1 to 4 carbon atoms, or
denotes a naphthylene radical which can be substituted by 1 or 2 sulfo groups or by an alkyl group of 1 to 4 carbon atoms, a nitro group, an alkanoylamino group of 2 to 5 carbon atoms or a benzoylamino group or the $-SO_2-Y$ group shown or by 1 or 2 sulfo groups and the $-SO_2-Y$ group shown or which can be substituted by the $-SO_2-Y$ group shown and 1 or 2 sulfo groups and an alkyl group of 1 to 4 carbon atoms, a nitro group, an alkanoylamino group of 2 to 5 carbon atoms or a benzoylamino group, or represents a naphthylene radical which contains bonded in the ortho-position relative to the azo group of the radical $Y-SO_2-D-N=N-$ an amino group, an alkylamino group of 1 to 4 carbon atoms or a phenylamino group optionally substituted by chlorine, alkyl of 1 to 4 carbon atoms, alkoxy of 1 to 4 carbon atoms, sulfo and/or carboxyl or a hydroxyl group and which can be additionally substituted by one or two sulfo groups or an alkyl group of 1 to 4 carbon atoms, a nitro group or an alkanoylamino group of 2 to 5 carbon atoms or additionally by one or two sulfo groups and an alkyl group ot 1 to 4 carbon atoms, a nitro group or an alkanoylamino group of 2 to 5 carbon atoms;
K is a 1-hydroxynaphthylene radical which contains bonded in the 2-position the azo group or is a 2-hydroxynaphthylene radical which contains bonded in the 1-position the azo group, both of which can be substituted by 1 or 2 sulfo groups or by an alkanoylamino group of 2 to 5 carbon atoms optionally substituted by chlorine, bromine, sulfo, sulfato, carboxyl and hydroxyl, or a benzoylamino group or by one or two sulfo groups and an alkanoylamino group of 2 to 5 carbon atoms optionally substituted by chlorine, bromine, sulfo, sulfato, carboxyl and hydroxyl, or a benzoylamino group, or
K is a naphthylene radical which can be substituted by 1 or 2 sulfo groups, or by 1 or 2 sulfo groups and an optionally monosubstituted or disubstituted amino group, the substituents of the amino groups belonging to the group of substituents consisting of alkyl of 1 to 4 carbon atoms, hydroxyalkyl of 1 to 4 carbon atoms, carboxyalkyl of 2 to 5 carbon atoms, sulfoalkyl of 1 to 4 carbon atoms, sulfatoalkyl of 1 to 4 carbon atoms, cyanoalkyl of 2 to 5 carbon atoms, carbalkoxyalkyl having alkyl radicals of 1 to 4 carbon atoms each, phenylalkyl having an alkyl radical of 1 to 4 carbon atoms, it being possible for the phenyl radical to be substituted by methyl, ethyl, methoxy, ethoxy, chlorine, sulfo and/or carboxyl, phenyl and phenyl which is substituted by alkyl of 1 to 4 carbon atoms, alkoxy of 1 to 4 carbon atoms, chlorine, carboxyl and/or sulfo, or
K is a 1-aminonaphthylene radical which contains bonded in the 2-position the azo group or is a 2-aminonaphthylene radical which contains bonded in the 1-position the azo group, it being possible for the two aminonaphthylene radicals to be substituted by 1 or 2 sulfo groups or by a hydroxyl group in the 5-, 6-, 7- or 8-position or by this hydroxyl group and 1 or 2 sulfo groups, or
K is a phenylene radical which can be substituted by 1 or 2 substituents selected from the following set of substituents: 2 alkyl of 1 to 4 carbon atoms, 2 alkoxy of 1 to 4 carbon atoms, 2 chlorine, 1 bromine, 1 alkanoylamino of 2 to 5 carbon atoms, which can be substituted by chlorine, bromine, sulfo, sulfato, carboxyl and hydroxyl, 1 benzoylamino, 1 sulfo, 1 carboxyl, 1 ureido, 1 phenylureido, 1 alkylsulfonylamino of 1 to 4 carbon atoms, 1 amino and 1 monosubstituted or disubstituted amino whose substituents are alkyl of 1 to 4 carbon atoms, hydroxyalkyl of 1 to 4 carbon atoms, carboxyalkyl of 2 to 5 carbon atoms, sulfoalkyl of 1 to 4 carbon atoms, sulfatoalkyl of 1 to 4 carbon atoms, cyanoalkyl of 2 to 5 carbon atoms, carbalkoxyalkyl having alkyl radicals of 1 to 4 carbon atoms each, phenylalkyl having an alkyl radical of 1 to 4 carbon atoms, whose phenyl radical can be substituted by methyl, ethyl, methoxy, ethoxy, chlorine, carboxyl and/or sulfo, phenyl and phenyl which is substituted by alkyl of 1 to 4 carbon atoms, alkoxy of 1 to 4 carbon atoms, chlorine, carboxyl and/or sulfo;
Y is the vinyl group or a β-thiosulfatoethyl, β-phosphatoethyl, β-chloroethyl or β-sulfatoethyl group;
Z is a radical of the general formula (3)

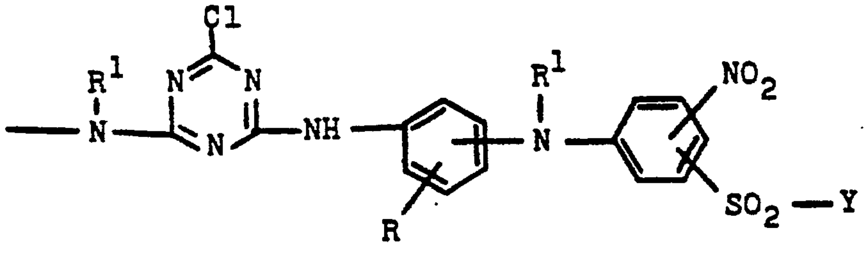

(3)

in which
$R^1$ stands for a hydrogen atom or an alkyl group of 1 to 4 carbon atoms which can be substituted by one

or two substituents from the group consisting of acetylamino, hydroxyl, sulfato, alkoxy of 1 to 4 carbon atoms, sulfo and carboxyl, it being possible for the two $R^1$s to be identical to or different from each other,
R denotes a hydrogen atom or a sulfo group and
Y has the abovementioned meaning, it being possible for the two Ys to be identical to or different from each other.

2. A compound as claimed in claim 1 of the general formula (2)

$$Y - SO_2 - D_1 - N = N \text{---} (E_1 - N = N)_k \text{---} K - Z \qquad (2)$$

in which
$D_1$ is a phenylene radical which can be substituted by 1 or 2 substituents which belong to the group of substituents consisting of alkyl of 1 to 4 carbon atoms, alkoxy of 1 to 4 carbon atoms, carboxyl, alkanoylamino of 2 to 5 carbon atoms, which can be substituted by chlorine, bromine, sulfo, sulfato, carboxyl and hydroxyl, benzoylamino, sulfobenzoylamino, phenylamino, sulfophenylamino, carbamoyl, carbamoyl which is monosubstituted or disubstituted by alkyl of 1 to 4 carbon atoms, sulfamoyl, sulfamoyl which is monosubstituted or disubstituted by alkyl of 1 to 4 carbon atoms, N-phenylsulfamoyl, N-phenyl-N-($C_1$–$C_4$-alkyl)-sulfamoyl, cyano, nitro, chlorine, bromine, fluorine, trifluoromethyl, hydroxyl and sulfo, or
$D_1$ is a naphthylene radical which can be substituted by 1 or 2 substituents which belong to the group of substituents consisting of sulfo, carboxyl, methyl, ethyl, methoxy, ethoxy, alkanoylamino of 2 to 5 carbon atoms, which can be substituted by chlorine, bromine, sulfo, sulfato, carboxyl and hydroxyl, benzoylamino, sulfobenzoylamino, chlorine, hydroxyl and nitro, and
$E_1$ is the radical of a couplable and diazotizable compound which in the synthesis of compounds (1) serves first as a coupling component and then as a diazo component and represents a phenylene radical which can be substituted by one or two substituents which are selected from the set consisting of 2 alkyl of 1 to 4 carbon atoms, 2 alkoxy of 1 to 4 carbon atoms, 2 chlorine, 1 bromine, 1 alkanoylamino of 2 to 5 carbon atoms, which can be substituted by chlorine, bromine, sulfo, sulfato, carboxyl, and hydroxyl, 1 benzoylamino, 2 sulfo, 1 carboxyl, 1 N,N-dialkylamino having alkyl groups of 1 to 4 carbon atoms each, 1 ureido, 1 phenylureido and 1 alkylsulfonylamino of 1 to 4 carbon atoms,
or denotes a naphthylene radical which can be substituted by 1 or 2 sulfo groups or by an alkyl group of 1 to 4 carbon atoms, a nitro group, an alkanoylamino group of 2 to 5 carbon atoms or a benzoylamino group or by 1 or 2 sulfo groups and an alkyl group of 1 to 4 carbon atoms, a nitro group, an alkanoylamino group of 2 to 5 carbon atoms or a benzoylamino group,
or represents a naphthylene radical which contains bonded in the ortho-position relative to the azo group of the radical $Y–SO_2–D–N=N–$ an amino group, an alkylamino group of 1 to 4 carbon atoms or a phenylamino group optionally substituted by chlorine, alkyl of 1 to 4 carbon atoms, alkoxy of 1 to 4 carbon atoms, sulfo and/or carboxyl or a hydroxyl group and which can additionally be substituted by one or two sulfo groups or an alkyl group of 1 to 4 carbon atoms, a nitro group, an alkanoylamino group of 2 to 5 carbon atoms optinally substituted by chlorine, bromine, sulfo, sulfato, carboxyl and hydroxyl, or a benzoylamino group or additinally by one or two sulfo groups and an alkyl group of 1 to 4 carbon atoms, a nitro group, an alkanoylamino group of 2 to 5 carbon atoms optionally substituted by chlorine, bromine, sulfo, sulfato, carboxyl and hydroxyl, or a benzoylamino group, and
K, Y, Z and k have the meanings indicated in claim 1.

3. A compound as claimed in claim 2, wherein $D_1$ is a phenylene radical which can be substituted by 1 or 2 substituents from the group consisting of alkyl of 1 to 4 carbon atoms, alkoxy of 1 to 4 carbon atoms, chlorine, carboxyl and sulfo or is a naphthylene radical which can be substituted by 1 or 2 sulfo groups.

4. A compound as claimed in claim 2, wherein $D_1$ is a radical of the formula (4e), (4f) or (4g)

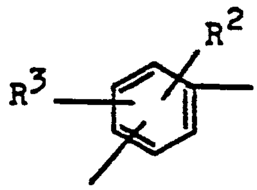

(4e)

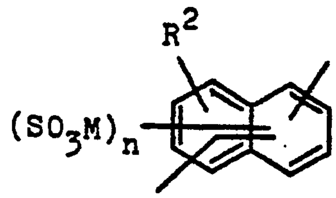

(4f)

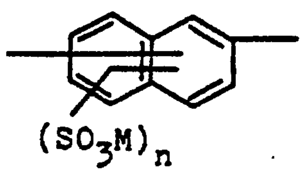

(4g)

in which

$R^2$ is a hydrogen atom, an alkyl group of 1 to 4 carbon atoms, an alkoxy group of 1 to 4 carbon atoms, a chlorine atom or a carboxyl group,

$R^3$ is a hydrogen atom, an alkyl group of 1 to 4 carbon atoms, an alkoxy group of 1 to 4 carbon atoms, a chlorine atom or a sulfo group,

M denotes a hydrogen atom or an alkali metal and

n stands for the number 1 or 2.

5. A compound as claimed in claim 1, 2, 3 or 4, wherein k denotes the number 1 and E or $E_1$ is a 1-hydroxy-naphthylene radical which contains the azo radical $Y{-}SO_2{-}D{-}N{=}N{-}$ or $Y{-}SO_2{-}D_1{-}N{=}N{-}$ bonded in the 2-position and is substituted by 1 or 2 sulfo groups or is the 1,4-phenylene radical which can be substituted by an amino group, an alkylamino group of 1 to 4 carbon atoms, an alkanoylamino group of 2 to 5 carbon atoms, methyl, ethyl, carboxyl, sulfo or ureido group or a chlorine atom or by one of these substituents and by a methyl, ethyl, methoxy, ethoxy or sulfo group or a chlorine atom, or is a 1,4-naphthylene radical which can substituted by an alkanoylamino group of 2 to 5 carbon atoms or a benzoylamino group and/or one or two sulfo groups.

6. A compound as claimed in any one of claims 1 to 5, wherein $R^1$ is a hydrogen atom or a methyl or ethyl group.

7. A compound as claimed in claim 1 conforming to the general formula

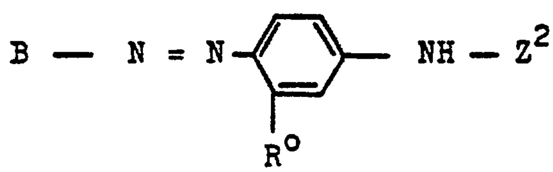

in which

B is a radical of the general formula (4b), (4c) or (4d)

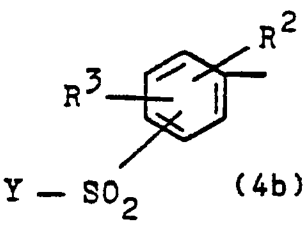

(4b)

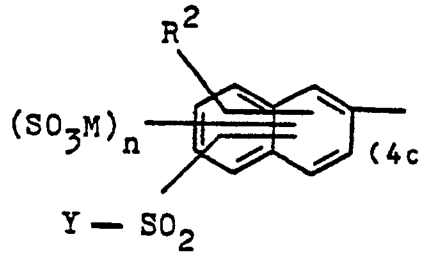

(4c)

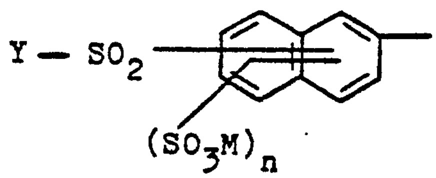

(4d)

in which

$R^2$ denotes a bromine atom, a nitro group or an alkanoylamino group of 2 to 5 carbon atoms, such as the acetylamino group, but preferably a hydrogen atom, an alkyl group of 1 to 4 carbon atoms, such as the ethyl group and in particular the methyl group, an alkoxy group of 1 to 4 carbon atoms, such as the ethoxy group and in particular the methoxy group, a chlorine atom or a carboxyl group,

$R^3$ is a bromine atom or a hydroxyl group but preferably a hydrogen atom, an alkyl group of 1 to 4 carbon atoms, such as the ethyl group and in particular the methyl group, an alkoxy group of 1 to 4 carbon atoms, such as the ethoxy group and in particular the methoxy group, a chlorine atom or a sulfo group and

Y has the meaning mentioned in claim 1;

$R^o$ is a hydrogen atom, a chlorine or bromine atom, an amino group, an alkanoylamino group of 2 to 5 carbon atoms, a sulfo, carboxyl, methyl, ethyl, methoxy, or ureido group;

$Z^2$ is a radical of the general formula (3b)

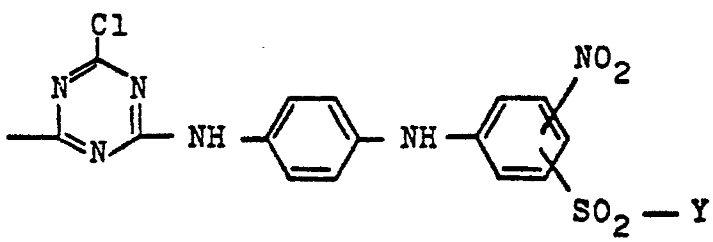

(3b)

in which Y has the meaning mentioned in claim 1 and the $-SO_2-Y$ group and the nitro group are bonded to the benzene nucleus in meta-position relative to each other, but they are not both at the same time in ortho-position to the amino group.

8. A compound as claimed in claim 1 in which Z is a radical of the formula $-NH-Z^2$ with $Z^2$ having the meaning given in claim 7.

9. A compound as claimed in claim 1 of the general formula

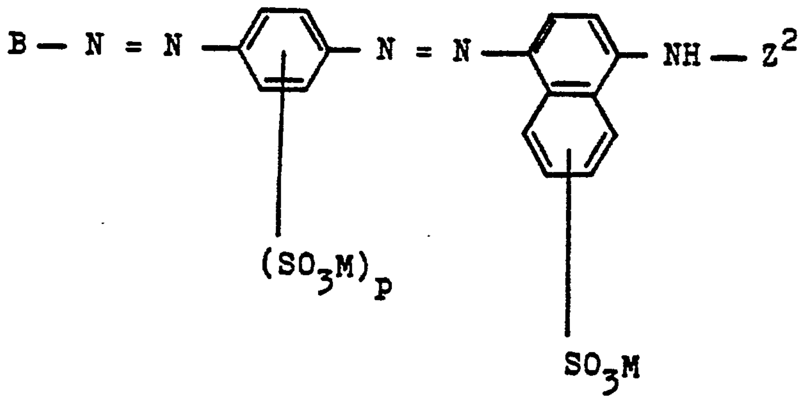

(14)

in which B and $Z^2$ have the meanings mentioned in claim 7, M stands for a hydrogen atom or an alkali metal and p is the number zero, 1 or 2.

10. A compound as claimed in claim 1 of the general formula

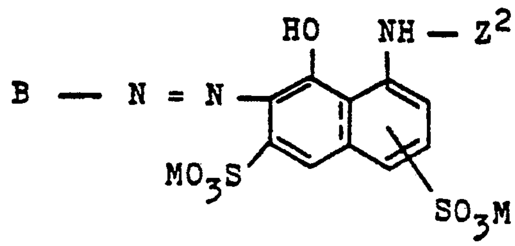

in which B and $Z^2$ have the meanings mentioned in claim 7 and M denotes a hydrogen atom or an alkali metal.

11. A compound as claimed in claim 1 of the general formula

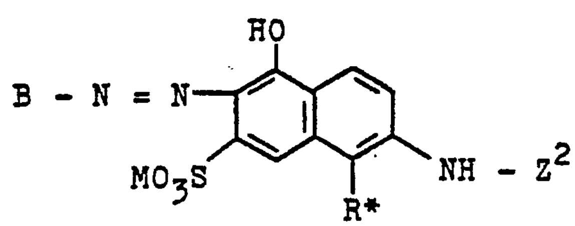

in which B and $Z^2$ have the meanings mentioned in claim 7, M stands for a hydrogen atom or an alkali metal and R* is a hydrogen atom or a sulfo group.

12. A compound as claimed in claim 1 of the general formula

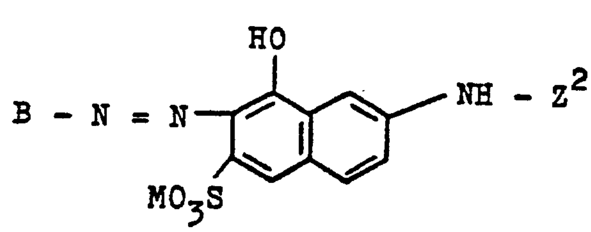

in which B and $Z^2$ have the meanings mentioned in claim 7 and M stands for a hydrogen atom or an alkali metal.

13. A compound as claimed in claim 1 of the general formula

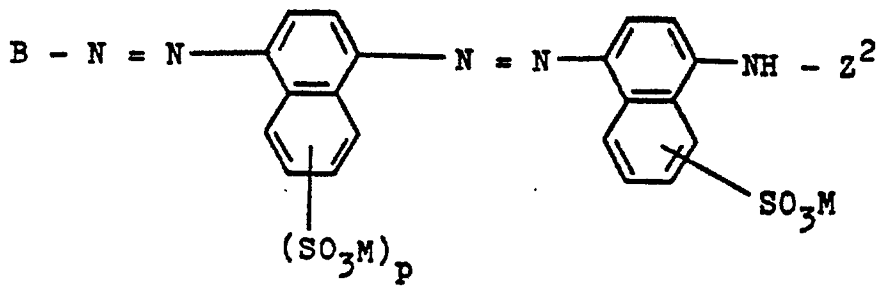

in which B and $Z^2$ have the meanings mentioned in claim 7, M stands for a hydrogen atom or an alkali metal and p is the number zero, 1 or 2.

14. A compound as claimed in any one of claims 1 to 13, wherein Y denotes the vinyl group or preferably a β-sulfatoethyl group.

15. A process for preparing the compounds of the general formula (1) mentioned and defined in claim 1, which comprises reacting a compound of the general formula (5)

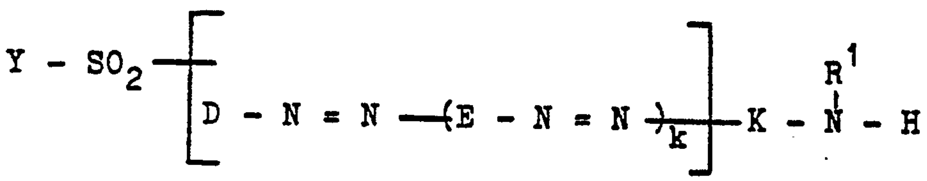

(5)

where D, E, K, Y, k and $R^1$ have the meanings mentioned in claim 1 with a dichlorotriazine compound of the general formula (6)

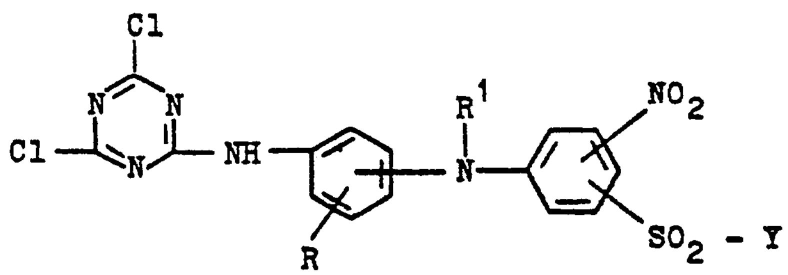

(6)

in which $R^1$, R and Y have the meanings mentioned in claim 1 with elimination of one mol of hydrogen chloride, or reacting a compound of the general formula (7)

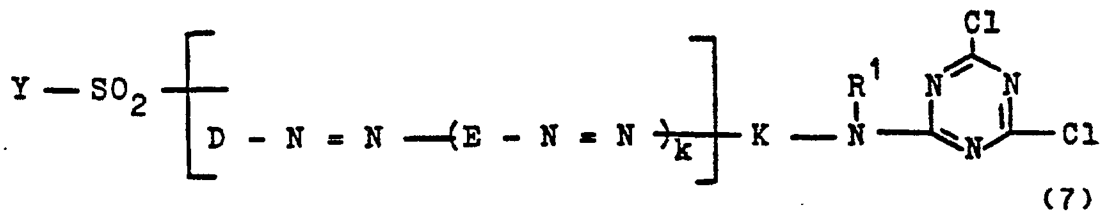

(7)

where D, E, K, Y, k and $R^1$ have the meaning mentioned in claim 1 with an aminodiphenylamine compound of the general formula (8)

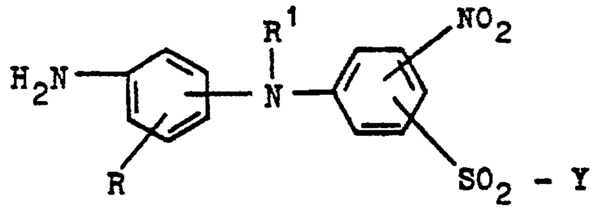

(8)

in which R1, R and Y have the meanings mentioned in claim 1 with elimination of one mol of hydrogen chloride, or
coupling a diazonium compound of an amine of the general formula (11)

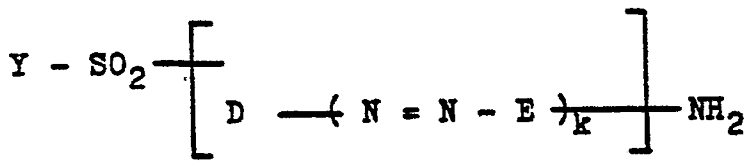

(11)

in which Y, D, E and k have the meanings mentioned for the formula (1) with a couplable compound of the general formula H–K–Z where K and Z have the abovementioned meaning.

16. Use of the compounds of the general formula (1) mentioned and defined in claim 1 or of the compounds of the general formula (1) prepared as claimed in claim 15, as dyes.

17. Use as claimed in claim 16, for dyeing (coloring) hydroxyl- and/or carboxamido-containing material, in particular fiber material.

18. A process for dyeing (coloring) hydroxyl- and/or carboxamido-containing material, preferably fiber material, by putting a dye onto or into the material and fixing it by means of heat and/or in the presence of an acidbinding agent, which comprises using as dye a compound of the general formula (1) mentioned and defined in claim 1 or a compound of the general formula (1) prepared as claimed in claim 15.

**Revendications**

1. Composé azoïque hydrosoluble, répondant à la formule générale (1)

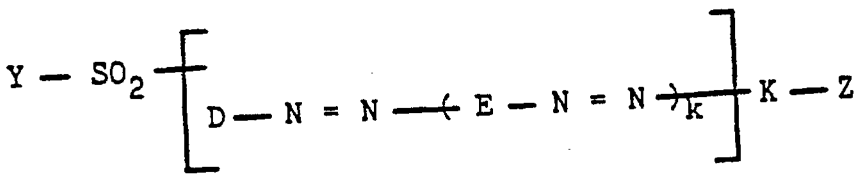

(1)

dans laquelle
k est un nombre nul ou valant 1;
le groupe $-SO_2-Y$ est obligatoirement fixé sur un atome de carbone d'un noyau aromatique de D ou d'un noyau aromatique de E ou d'un noyau benzénique d'un substituant de D;
D représente le reste phényle, qui peut porter 1, 2 ou 3 substituants choisis parmi un groupe alkyle ayant 1 à 4 atomes de corbone, alcoxy ayant 1 à 4 atomes de carbone, carboxy, alcanoylamino ayant 2 à 5 atomes de carbone (pouvant être substitué par du chlore ou brome ou par un groupe sulfo, sulfato, carboxy et hydroxy), un groupe benzoylamino, sulfobenzoylamino, phénylamino, sulfophénylamino, carbamoyle, carbamoyle (monosubstitué ou disubstitué par un groupe alkyle ayant 1 à 4 atomes de carbone), sulfamoyle, sulfamoyle (monosubstitué ou disubstitué par un groupe alkyle ayant 1 à 4 atomes de carbone), N-phénylsulfamoyle, N-phényl-N-(alkyl en $C_1$ à $C_4$)-sulfamoyle, cyano, nitro, chloro, bromo, fluoro, trifluorométhyle, hydroxyle et sulfo, ou bien
D représente un reste naphtyle, pouvant porter 1, 2 ou 3 substituants choisis parmi un groupe sulfo, carboxy, méthyle, éthyle, méthoxy, éthoxy, alcanoylamino ayant 2 à 5 atomes de carbone (pouvant porter comme substituant un atome de chlore ou de brome ou un groupe sulfo, sulfato, carboxy et hydroxy), un groupe benzoylamino, sulfobenzoylamino, chloro, hydroxy ou nitro, ou bien
D représente le reste phényle, qui est substitué par le groupe $-SO_2-Y$ indiqué, et peut porter en outre 1 ou 2 substituants, choisis parmi un groupe alkyle ayant 1 à 4 atomes de carbone, alcoxy ayant 1 à 4 atomes de carbone, carboxy, alcanoylamino ayant 2 à 5 atomes de carbone (pouvant être substitué par du chlore ou du brome ou par un groupe sulfo, sulfato, carboxy ou hydroxy), un groupe benzoylamino, sulfobenzoylamino, phénylamino, sulfophénylamino, carbamoyle, carbamoyle (monosubstitué ou disubstitué

par un groupe alkyle ayant 1 à 4 atomes de carbone), sulfamoyle, sulfamoyle (monosubstitué ou disubstitué par un groupe alkyle ayant 1 à 4 atomes de carbone), N-phénylsulfamoyle, N-phényl-N(alkyl en $C_1$ à $C_4$)-sulfamoyle, cyano, nitro, un atome de chlore, de brome ou de fluor, un groupe frifluorométhyle, hydroxy et sulfo, ou bien

D représente un reste naphtyle, qui est substitué par le groupe $-SO_2-Y$ indiqué et qui peut porter en outre un ou deux substituants choisis parmi un groupe sulfo, carboxy, méthyle, éthyle, méthoxy, éthoxy, alcanoylamino ayant 2 à 5 atomes de carbone (pouvant être substitué par un atome de chlore ou de brome ou par un groupe sulfo, sulfato, carboxy et hydroxy), benzoylamino, sulfobenzoylamino, un atome de chlore, un groupe hydroxyle et un groupe nitro;

E est le reste d'un composé copulable et diazotable, servant, lors de la synthèse des composés (1) tout d'abord de copulants puis de composant diazotable, et il représente un reste phénylène, pouvant porter 1 ou 2 substituants choisis parmi deux groupes alkyles ayant 1 à 4 atomes de carbone, deux groupes alcoxy ayant 1 à 4 atomes de carbone, deux atomes de chlore, un atome de brome, un groupe alcanoyle ayant 2 à 5 atomes de carbone (pouvant être substitué par du chlore ou du brome ou par un groupe sulfo, sulfato, carboxy ou hydroxy), un groupe benzoylamino, deux groupes sulfo, un groupe carboxy, un groupe N,N-dialkylamino dont les groupes alkyles ont chacun 1 à 4 atomes de carbone, un groupe uréido, un groupe phényluréido et un groupe alkylsulfonylamino comportant 1 à 4 atomes de carbone, ou bien

E représente un reste naphtylène pouvant être substitué par 1 ou 2 groupes sulfo ou par un groupe alkyle ayant 1 à 4 atomes de carbone, un groupe nitro, un groupe alcanoylamino ayant 2 à 5 atomes de carbone ou un groupe benzoylamino ou le groupe $-SO_2-Y$ indiqué, ou par un ou deux groupes sulfo et le groupe $-SO_2-Y$ indiqué, ou bien par le groupe $-SO_2-Y$ indiqué et un ou deux groupes sulfo et un groupe alkyle ayant 1 à 4 atomes de carbone, un groupe nitro, un groupe alcanoylamino ayant 2 à 5 atomes de carbone ou un groupe benzoylamino, ou bien

E représente un reste naphtylène qui porte, en position ortho par rapport au groupe azo du reste $Y-SO_2-D-N=N-$, un groupe amino, un groupe alkylamino ayant 1 à 4 atomes de carbone ou un groupe phénylamino (éventuellement substitué par du chlore, par un groupe alkyle ayant 1 à 4 atomes de carbone, alcoxy ayant 1 à 4 atomes de carbone, sulfo et/ou carboxy) ou un groupe hydroxyle et qui peut en outre être substitué par un ou deux groupes sulfo ou par un groupe alkyle ayant 1 à 4 atomes de carbone, un groupe nitro ou un groupe alcanoylamino ayant 2 à 5 atomes de carbone ou, encore, par un ou deux groupes sulfo et un groupe alkyle ayant 1 à 4 atomes de carbone, un groupe nitro ou alcanoylamino ayant 2 à 5 atomes de carbone;

K représente un reste hydroxy-1 naphtylène, qui comporte le groupe azo fixé en position 2, ou bien K représente un reste hydroxy-2-naphtylène, qui comporte le groupe azo fixé en position 1, ces deux groupes pouvant porter comme substituant un ou deux groupes sulfo ou un groupe alcanoylamino ayant 2 à 5 atomes de carbone (éventuellement substitué par un atome de chlore ou de brome ou par un groupe sulfo, sulfato, carboxy ou hydroxy ou un groupe benzoylamino) ou un ou deux groupes sulfo et un groupe alcanoylamino ayant 2 à 5 atomes de carbone (éventuellement substitué par du chlore ou du brome ou par un groupe sulfo, sulfato, carboxy et hydroxy) ou un benzoylamino, ou bien

K représente un reste naphtylène, qui peut être substitué par un ou deux groupes sulfo ou bien par un ou deux groupes sulfo et un groupe amino éventuellement monosubstitué ou disubstitué, les substituants du groupe amino étant choisis parmi un groupe alkyle ayant 1 à 4 atomes de carbone, hydroxyalkyle ayant 1 à 4 atomes de carbone, carboxyalkyle ayant 2 à 5 atomes de carbone, sulfoalkyle ayant 1 à 4 atomes de carbone, sulfatoalkyle ayant 1 à 4 atomes de carbone, cyanoalkyle ayant 2 à 5 atomes de carbone, carbalcoxyalkyle (alcoxycarbonylalkyle) comportant des restes alkyles ayant chacun 1 à 4 atomes de carbone, phénylalkyle (ayant un reste alkyle comportant 1 à 4 atomes de carbone, le reste phényle pouvant être substitué par un groupe méthyle, éthyle, méthoxy, éthoxy, chloro, sulfo et/ou carboxy), un groupe phényle et un groupe phényle (substitué par un groupe alkyle ayant 1 à 4 atomes de carbone, alcoxy ayant 1 à 4 atomes de carbone, chloro, carboxy et/ou sulfo), ou bien

K représente un reste amino-1 naphtylène, qui contient le groupe azo fixé en position 2, ou bien K représente un reste amino-2 naphtylène qui contient le groupe azo fixé en position 1, les deux restes amino naphtylène pouvant être substitués par un ou deux groupes sulfo ou par un groupe hydroxyle en position 5, 6, 7 ou 8, ou par ce groupe hydroxyle et par un ou deux groupes sulfo, ou bien

K représente un groupe phénylène, qui peut être substitué par un ou deux substituants choisis parmi deux groupes alkyles ayant 1 à 4 atomes de carbone, deux groupes alcoxy ayant 1 à 4 atomes de carbone, deux atomes de chlore, un atome de brome, un groupe alcanoylamino ayant 2 à 5 atomes de carbone (pouvant être substitué par du chlore, du brome, un groupe sulfo, sulfato, carboxy ou hydroxy), un groupe benzoylamino, un groupe sulfo, un groupe carboxy, un groupe uréido, un groupe phényluréido, un groupe alkylsulfonylamino ayant 1 à 4 atomes de carbone, un groupe amino et un groupe amino monosubstitué ou disubstitué, dont les substituants sont un groupe alkyle ayant 1 à 4 atomes de carbone, hydroxyalkyle ayant 1 à 4 atomes de carbone, carboxyalkyle ayant 2 à 5 atomes de carbone, sulfoalkyle ayant 1 à 4 atomes de carbone, sulfatoalkyle ayant 1 à 4 atomes de carbone, cyanoalkyle ayant 2 à 5 atomes de carbone, carbalcoxy alkyle (alcoxycarbonylalkyle) dont les restes alkyles ont chacun 1 à 4 atomes de carbone, phénylalkyle (dont le reste alkyle comporte 1 à 4 atomes de carbone et dont le resté phényle peut être substitué par un reste méthyle, éthyle, méthoxy, éthoxy, chloro, carboxy et/ou sulfo), un groupe phényle et un groupe phényle (substitué par un groupe alkyle ayant 1 à 4 atomes de carbone, alcoxy ayant 1 à 4 atomes de carbone, par du chlore, un groupe carboxy et/ou sulfo);
Y représente le groupe vinyle ou un groupe thiosulfato-2 éthyle, phosphato-2 éthyle, chloro-2 éthyle ou sulfato-2 éthyle;
Z représente un reste de formule générale (3)

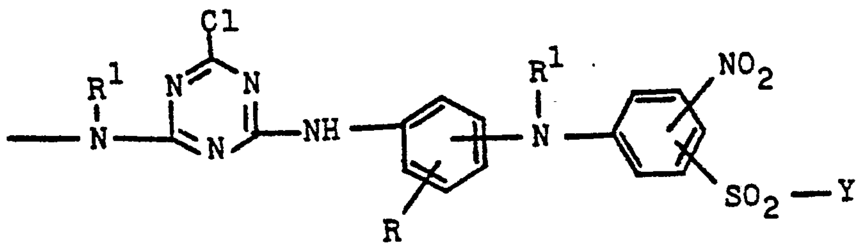 (3)

dans laquelle
$R^1$ représente un atome d'hydrogène ou un groupe alkyle ayant 1 à 4 atomes de carbone (pouvant porter un ou deux substituants choisis parmi un groupe éthylamino, hydroxy, sulfato, alcoxy ayant 1 à 4 atomes de carbone, sulfo et carboxy), les deux symboles $R^1$ pouvant être identiques ou différents,
R représente un atome d'hydrogène ou un groupe sulfo,
Y a le sens précité, les deux symboles Y pouvant présenter des sens identiques ou différents.

2. Composé selon la revendication 1, de formule générale (2)

$$Y - SO_2 - D_1 - N = N -(E_1 - N = N)_k - K - Z \qquad (2)$$

dans laquelle
$D_1$ représente un reste phénylène et pouvant porter un ou deux substituants choisis parmi un groupe alkyle ayant 1 à 4 atomes de carbone, alcoxy ayant 1 à 4 atomes de carbone, carboxy, alcanoylamino ayant 2 à 5 atomes de carbone (pouvant être substitué par du chlore ou du brome et/ou par un groupe sulfo, sulfato, carboxy et hydroxy), un groupe benzoylamino, sulfobenzoylamino, phénylamino, sulfophénylamino, carbamoyle, carbamoyle (monosubstitué ou disubstitué par un groupe alkyle ayant 1 à 4 atomes de carbone), sufamoyle, sulfamoyle (monosubstitué ou disubstitué par un groupe alkyle ayant 1 à 4 atomes de carbone), N-phénylsulfamoyle, N-phényl-N-(alkyle en $C_1$ à $C_4$)-sulfamoyle, cyano, nitro, chloro, bromo, fluoro, trifluorométhyle, hydroxy et/ou sulfo; ou
$D_1$ représente un reste naphtylène pouvant porter un ou deux substituants choisis parmi un groupe sulfo, carboxy, méthyle, éthyle, méthoxy, éthoxy, alcanoylamino ayant 2 à 5 atomes de carbone (pouvant être substitué par du chlore ou du brome ou par un groupe sulfo, sulfato, carboxy ou hydroxy), benzoylamino, sulfobenzoylamino, chloro, hydroxy ou nitro, et
$E_1$ représente le reste d'un composé copulable et diazotable, qui sert, lors de la synthèse des composés (1) tout d'abord de copulant puis de composant diazotable, et
$E_1$ représente un reste phénylène pouvant porter un ou deux substituants choisis parmi deux groupes alkyles ayant 1 à 4 atomes de carbone, deux groupes alcoxy ayant 1 à 4 atomes de carbone, deux atomes de chlore, un atome de brome, un groupe alcanoylamino ayant 2 à 5 atomes de carbone (pouvant être substitué par un atome de chlore ou de brome ou par un groupe sulfo, sulfato, carboxy ou hydroxy), un groupe benzoylamino, deux groupes sulfo, un groupe carboxy, un groupe N,N-dialkylamino dont les groupes alkyles ont chacun 1 à 4 atomes de carbone, un groupe uréido, un groupe phényluréido et un groupe alkylsulfonylamino ayant 1 à 4 atomes de carbone, ou bien
$E_1$ représente un reste naphtylène, pouvant être substitué par un ou deux groupes sulfo ou par un groupe alkyle ayant 1 à 4 atomes de carbone, un groupe nitro, un groupe alcanoylamino ayant 2 à 5 atomes de carbone ou un groupe benzoylamino, ou par un ou deux groupes sulfo et un groupe alkyle ayant 1 à 4 atomes de carbone, un groupe nitro, un groupe alcanoylamino ayant 2 à 5 atomes de carbone ou un groupe benzoylamino, ou bien
$E_1$ représente un reste naphtylène qui contient, fixé en position ortho du groupe du reste $Y-SO_2-D-N=N-$ un groupe amino, un groupe alkylamino ayant 1 à 4 atomes de carbone ou un groupe phénylamino (éventuellement substitué par du chlore, par un groupe alkyle ayant 1 à 4 atomes de carbone, alcoxy ayant 1 à 4 atomes de carbone, sulfo et/ou carboxy) ou un groupe hydroxyle, et qui peut encore être substitué par un ou deux groupes sulfo ou par un groupe alkyle ayant 1 à 4 atomes de carbone, un groupe nitro, un groupe alcanoylamino ayant 2 à 5 atomes de carbone (éventuellement substitué par du chlore ou du brome ou par un groupe sulfo, sulfato, carboxyhydroxy) ou un groupe benzoylamino, ou également par un ou deux groupes sulfo et un groupe alkyle ayant 1 à 4 atomes de carbone, un groupe nitro, un groupe alcanoylamino ayant 2 à 5 atomes de carbone (éventuellement substitué par du chlore ou du brome et par un groupe sulfo, sulfato, carboxy et hydroxy), ou un groupe benzoylamino, et
K, Y, Z et k ont les sens indiqués à la revendication 1.

3. Composé selon la revendication 2, caractérisé en ce que $D_1$ est un reste phénylène pouvant porter un ou deux substituants choisis parmi un groupe alkyle ayant 1 à 4 atomes de carbone, alcoxy ayant 1 à 4 atomes de carbone, 1 atome de chlore, un groupe carboxy et un groupe sulfo, ou bien $D_1$ est un reste naphtylène, pouvant porter comme substituant un ou deux groupes sulfo.

4. Composé selon la revendication 2, caractérisé en ce que $D_1$ représente un reste répondant à l'une des formules (4e), (4f) ou (4g),

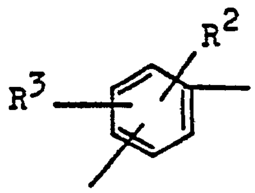

(4e)

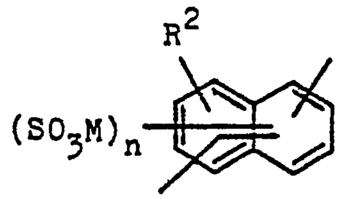

(4f)

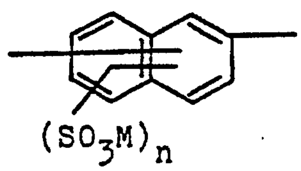

(4g)

dans lesquelles
$R^2$ représente un atome d'hydrogène, un groupe alkyle ayant 1 à 4 atomes de carbone, un groupe alcoxy ayant 1 à 4 atomes de carbone, un atome de chlore ou un groupe carboxy,
$R^3$ représente un atome d'hydrogène, un groupe alkyle ayant 1 à 4 atomes de carbone, un groupe alcoxy ayant 1 à 4 atomes de carbone, un atome de chlore ou un groupe sulfo,
M représente un atome d'hydrogène ou un métal alcalin, et
n est un nombre valant 1 ou 2.

5. Composé selon l'une des revendications 1, 2, 3 ou 4, caractérisé en ce que k représente le nombre 1 et E ou $E_1$ représente un reste hydroxy-1 naphtylène, comportant en position 2 le reste azoïque $Y{-}SO_2{-}D{-}N{=}N{-}$ ou $Y{-}SO_2{-}D_1{-}N{=}N{-}$, et qui est substitué par un ou deux groupes sulfo, ou bien E représente le reste 1,4-phénylène, pouvant être substitué par un groupe amino, par un groupe alkylamino ayant 1 à 4 atomes de carbone, alcanoylamino ayant 2 à 5 atomes de carbone, un groupe méthyle, éthyle, carboxy, sulfo ou uréido ou un atome de chlore ou par l'un de ses substituants et par un groupe méthyle, éthyle, méthoxy, éthoxy ou sulfo, ou par un atome de chlore, ou bien E représente un reste naphtylène-1,4, pouvant être substitué par un groupe alcanoylamino ayant 2 à 5 atomes de carbone, ou par un groupe benzoylamino et/ou par un ou deux groupes sulfo.

6. Composé selon l'une quelconque des revendications 1 à 5, caractérisé en ce que $R^1$ représente un atome d'hydrogène ou un groupe méthyle ou éthyle.

7. Composé selon la revendication 1, répondant à la formule générale

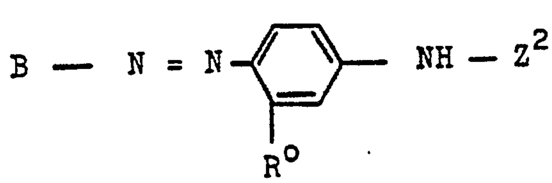

dans laquelle
B représente un reste de dormule générale (4b), (4c) ou (4d)

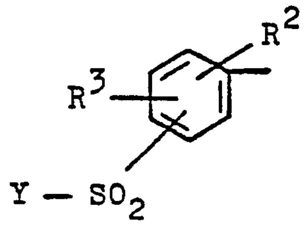

(4b)

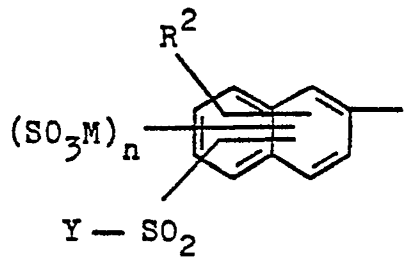

(4c)

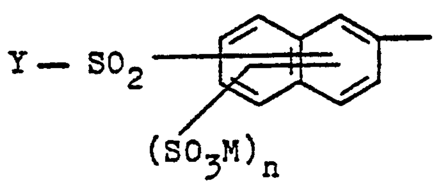

(4d)

dans lesquelles
$R^2$ représente un atome de brome, un groupe nitro ou un groupe alcanoylamino ayant 2 à 5 atomes de carbone, comme le groupe acétylamino, mais de préférence un atome d'hydrogène, un groupe alkyle ayant 1 à 4 atomes de carbone, comme le groupe éthyle et en particulier le groupe méthyle, un groupe alcoxy ayant 1 à 4 atomes de carbone, comme le groupe éthoxy et en particulier le groupe méthoxy, un atome de chlore, ou un groupe carboxy,
$R^3$ représente un atome de brome ou un groupe hydroxy, mais de préférence un atome d'hydrogène, un groupe alkyle ayant 1 à 4 atomes de carbone, comme le groupe éthyle et en particulier le groupe méthyle, un groupe alcoxy ayant 1 à 4 atomes de carbone, comme le groupe éthoxy et en particulier le groupe méthoxy, un atome de chlore et un groupe sulfo, et
Y a le sens indiqué à la revendication 1,
$R^o$ représente un atome d'hydrogène, un atome de chlore ou de brome, un groupe amino, un groupe alcanoylamino ayant 2 à 5 atomes de crbone, un groupe sulfo, carboxy, méthyle, éthyle, méthoxy ou uréido;
$Z^2$ représente un reste de formule générale (3b)

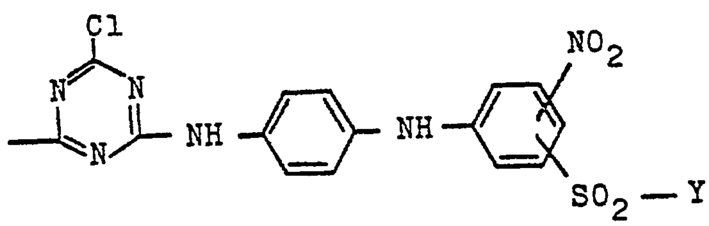

(3b)

dans laquelle Y a le sens indiqué à la revendication 1, et le groupe $-SO_2-Y$ et le groupe nitro sont fixés en position méta l'un par rapport à l'autre sur le noyau benzénique, mais les deux ne sont pas simultanément en ortho par rapport au groupe amino.

8. Composé selon la revendication 1, caractérisé en ce que Z représente un reste de formule $-NH-Z^2$, dans laquelle $Z^2$ a le sens indiqué à la revendication 7.

9. Composé selon la revendication 1, de formule générale

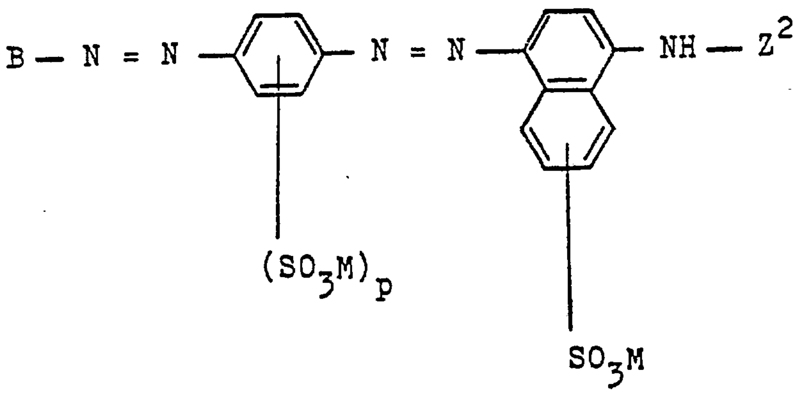

(14)

dans laquelle B et $Z^2$ ont les sens indiqués à la revendication 7, M représente un atome d'hydrogène ou un métal alcalin, et p est un nombre nul ou valant 1 ou 2.

10. Composé selon la revendication 1, de formule générale

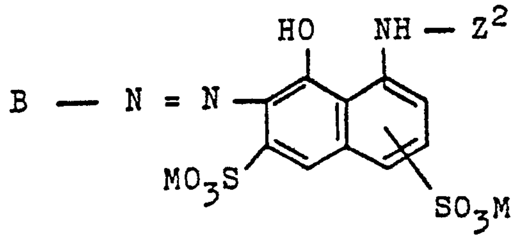

dans laquelle B et $Z^2$ ont les sens indiqués à la revendication 7, et M représente un atome d'hydrogène ou un métal alcalin.

11. Composé selon la revendication 1, de formule générale

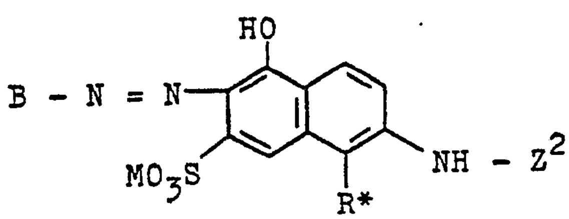

dans laquelle B et $Z^2$ ont les sens indiqués à la revendication 7, M représente un atome d'hydrogène ou un métal alcalin, et R* représente un atome d'hydrogène ou un groupe sulfo.

12. Composé selon la revendication 1, de formule générale

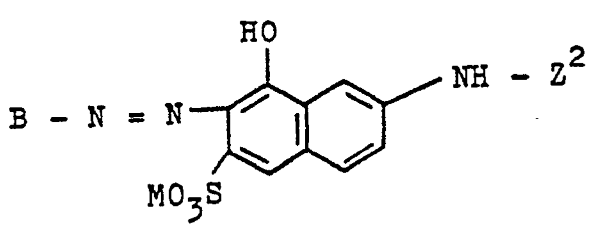

dans laquelle B et $Z^2$ ont les sens indiqués dans la revendication 7 et M représente un atome d'hydrogène ou un métal alcalin.

13. Composé selon la revendication 1, de formule générale

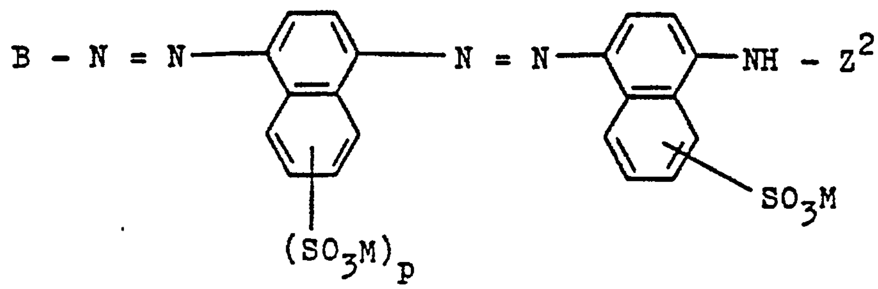

dans laquelle B et $Z^2$ ont les sens indiqués à la revendication 7, M représente un atome d'hydrogène ou un métal alcalin et p est un nombre nul ou valant 1 ou 2.

14. Composé selon l'une des revendications 1 à 13, caractérisé en ce que Y représente le groupe vinyle ou de préférence un groupe sulfato-2 éthyle.

15. Procédé pour préparer les composés cités et définis à la revendication 1, de formule générale (1), caractérisé en ce qu'on fait réagir un composé de formule générale (5)

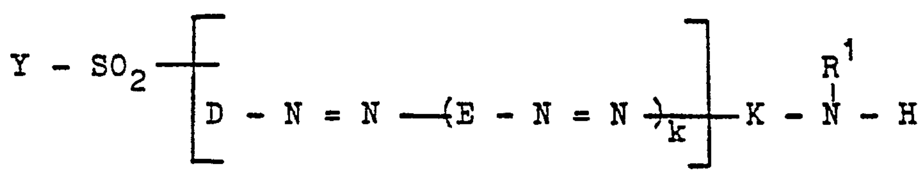

(5)

dans laquelle D, E, K, Y, k et $R^1$ ont les sens indiqués à la revendication 1, avec une dichlorotriazine de formule générale (6)

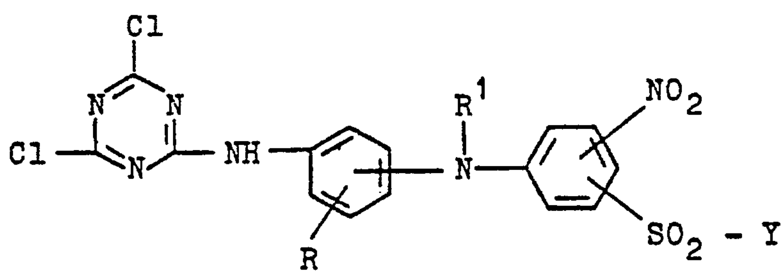

(6)

dans laquelle $R^1$, R et Y ont les sens indiqués à la revendication 1, avec séparation d'une mole de chlorure d'hydrogène, ou bien en ce qu'on fait réagir un composé de formule générale (7)

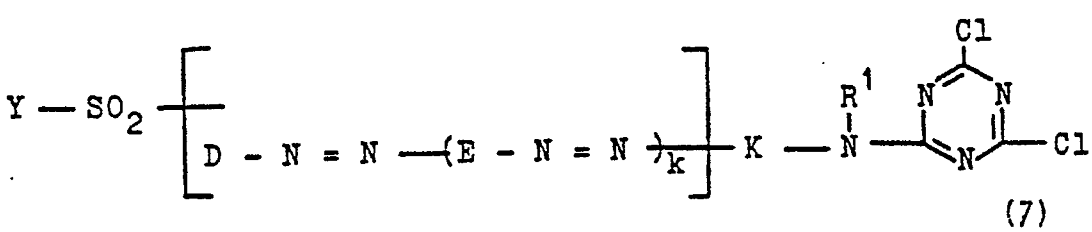

(7)

dans laquelle D, E, K, Y, k et $R^1$ ont le sens indiqué à la revendication 1, avec une aminodiphénylamine de formule générale (8)

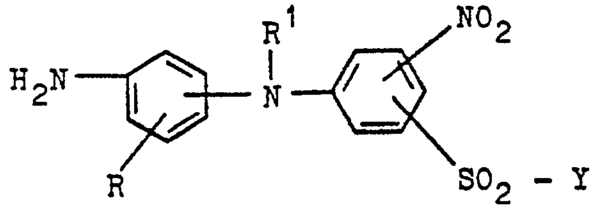

(8)

dans laquelle $R^1$, R et Y ont les indiqués à la revendication 1, avec séparation d'une mole de chlorure d'hydrogène, ou bien
en ce qu'on copule un composé de diazonium dérivant d'une amine de formule générale (11)

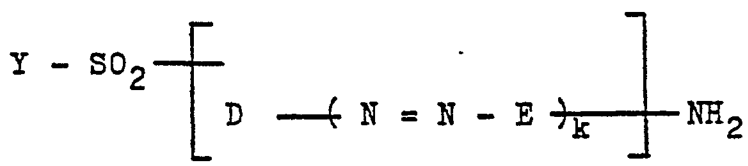

(11)

dans laquelle Y, D, E et k ont les sens indiqués pour la formule (1), avec un composé copulable de formule générale H–K–Z, dans laquelle K et Z ont le sens précité.

16. Utilisation des composés de formule générale (1) cités et définis à la revendication 1, ou des composés de formule générale (1), préparés selon la revendication 15, comme colorants.

17. Utilisation selon la revendication 16 pour teindre (colorer) une matière contenant des groupes hydroxyles et/ou des groupes carboxamides, en particulier une matière fibreuse.

18. Procédé pour teindre (colorer) une matière contenant des groupes hydroxyles et/ou carboxamides, de préférence une matière fibreuse, procédé selon lequel on applique un colorant sur la matière ou l'on introduit un colorant dans cette matière et on l'y fixe à l'aide de la chaleur et/ou en présence d'un agent de fixation des acides, procédé caractérisé en ce qu'on utilise comme colorant un composé de formule générale (1) citée et définie à la revendication 1 ou un composé de formule générale (1), préparé selon la revendication 15.